(19) Europäisches Patentamt
European Patent Office
Office européen des brevets

(11) **EP 4 387 352 A1**

(12) **EUROPEAN PATENT APPLICATION**
published in accordance with Art. 153(4) EPC

(43) Date of publication:
**19.06.2024 Bulletin 2024/25**

(51) International Patent Classification (IPC):
$H04W\ 72/02$ (2009.01)  $H04W\ 72/04$ (2023.01)
$H04W\ 76/28$ (2018.01)  $H04W\ 4/40$ (2018.01)
$H04W\ 92/18$ (2009.01)

(21) Application number: 22856102.3

(22) Date of filing: 04.08.2022

(52) Cooperative Patent Classification (CPC):
**H04W 4/40; H04W 72/02; H04W 72/04;**
**H04W 76/28; H04W 92/18**

(86) International application number:
**PCT/KR2022/011535**

(87) International publication number:
**WO 2023/018103 (16.02.2023 Gazette 2023/07)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 13.08.2021  KR 20210107368
24.08.2021  KR 20210111646
24.08.2021  US 202163236680 P
26.08.2021  US 202163237480 P

(71) Applicant: **LG Electronics Inc.**
**Yeongdeungpo-gu**
**Seoul 07336 (KR)**

(72) Inventors:
• **KO, Woosuk**
**Seoul 06772 (KR)**
• **SEO, Hanbyul**
**Seoul 06772 (KR)**
• **LEE, Seungmin**
**Seoul 06772 (KR)**

(74) Representative: **Plasseraud IP**
**66, rue de la Chaussée d'Antin**
**75440 Paris Cedex 09 (FR)**

(54) **METHOD AND APPARATUS FOR EXCLUDING RESOURCE ON BASIS OF PARTIAL SENSING OPERATION IN NR V2X**

(57) Proposed is a method for operation of a first device (100) in a wireless communication system. The method may comprise the steps of: determining a plurality of durations that are included in a resource selection window, and include a first duration and a second duration; determining a first valid resource set enabling a first ratio related to the first duration to be satisfied and a second valid resource set enabling a second ratio related to the second duration to be satisfied; and selecting a transmission resource from the first valid resource set.

EP 4 387 352 A1

# FIG. 13

obtaining an SL DRX configuration related to a second device ⟶ S1310

obtaining information related to a resource pool ⟶ S1320

triggering resource selection for a transmission of a MAC PDU ⟶ S1330

determining a resource selection window for a resource selection in a resource pool ⟶ S1340

determining a plurality of intervals included in a resource selection window, and including a first interval and a second interval ⟶ S1350

determining a first available resource set that causes a first ratio related to a first interval to be met, and a second available resource set that causes a second ratio related to a second interval to be met ⟶ S1360

selecting a transmission resource from a first available resource set ⟶ S1370

transmitting, to a second device, SCI for scheduling of a PSSCH through a PSCCH, based on a transmission resource ⟶ S1380

transmitting, to a second device, a MAC PDU through a PSSCH, based on a transmission resource ⟶ S1390

**Description**

**TECHNICAL FIELD**

This disclosure relates to a wireless communication system.

**BACKGROUND ART**

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

**DISCLOSURE**

**TECHNICAL SOLUTION**

According to an embodiment of the present disclosure, a method for performing, by a first device, wireless communication may be proposed. For example, the method may comprise: obtaining a sidelink (SL) discontinuous reception (DRX) configuration related to a second device; obtaining information related to a resource pool; triggering resource selection for a transmission of a medium access control (MAC) protocol data unit (PDU); determining a resource selection window for the resource selection in the resource pool; determining a plurality of intervals included in the resource selection window, and including a first interval and a second interval; determining a first available resource set that causes a first ratio related to the first interval to be met, and a second available resource set that causes a second ratio related to the second interval to be met; selecting a transmission resource from the first available resource set; transmitting, to the second device, sidelink control information (SCI) for scheduling of a physical sidelink shared channel (PSSCH) through a physical sidelink control channel (PSCCH), based on the transmission resource; and transmitting, to the second device, the MAC PDU through the PSSCH, based on the transmission resource, wherein the first interval may include a first active time of the SL DRX configuration.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain a sidelink (SL) discontinuous reception (DRX) configuration related to a second device; obtain information related to a resource pool; trigger resource selection for a transmission of a medium access control (MAC) protocol data unit (PDU); determine a resource selection window for the resource selection in the resource pool; determine a plurality of intervals included in the resource selection window, and including a first interval and a second interval; determine a first available resource set that causes a first ratio related to the first interval to be met, and a second available resource set that causes a second ratio related to the second interval to be met; select a transmission resource from the first available resource set; transmit, to the second device, sidelink control information (SCI) for scheduling of a physical sidelink shared channel (PSSCH) through a physical sidelink control channel (PSCCH), based on the transmission resource; and transmit, to the second device, the MAC PDU through the PSSCH, based on the transmission resource, wherein the first interval may include a first active time of the SL DRX configuration.

According to an embodiment of the present disclosure, a device adapted to control a first user equipment (UE) may be proposed. For example, the device may comprise: one or more processors; and one or more memories operably connectable to the one or more processors and storing instructions. For example, the one or more processors may execute the instructions to: obtain a sidelink (SL) discontinuous reception (DRX) configuration related to a second UE;

obtain information related to a resource pool; trigger resource selection for a transmission of a medium access control (MAC) protocol data unit (PDU); determine a resource selection window for the resource selection in the resource pool; determine a plurality of intervals included in the resource selection window, and including a first interval and a second interval; determine a first available resource set that causes a first ratio related to the first interval to be met, and a second available resource set that causes a second ratio related to the second interval to be met; select a transmission resource from the first available resource set; transmit, to the second UE, sidelink control information (SCI) for scheduling of a physical sidelink shared channel (PSSCH) through a physical sidelink control channel (PSCCH), based on the transmission resource; and transmit, to the second UE, the MAC PDU through the PSSCH, based on the transmission resource, wherein the first interval may include a first active time of the SL DRX configuration.

According to an embodiment of the present disclosure, a non-transitory computer-readable storage medium storing instructions may be proposed. For example, the instructions, when executed, may cause a first device to: obtain a sidelink (SL) discontinuous reception (DRX) configuration related to a second device; obtain information related to a resource pool; trigger resource selection for a transmission of a medium access control (MAC) protocol data unit (PDU); determine a resource selection window for the resource selection in the resource pool; determine a plurality of intervals included in the resource selection window, and including a first interval and a second interval; determine a first available resource set that causes a first ratio related to the first interval to be met, and a second available resource set that causes a second ratio related to the second interval to be met; select a transmission resource from the first available resource set; transmit, to the second device, sidelink control information (SCI) for scheduling of a physical sidelink shared channel (PSSCH) through a physical sidelink control channel (PSCCH), based on the transmission resource; and transmit, to the second device, the MAC PDU through the PSSCH, based on the transmission resource, wherein the first interval may include a first active time of the SL DRX configuration.

According to an embodiment of the present disclosure, a method for performing, by a second device, wireless communication may be proposed. For example, the method may comprise: obtaining a sidelink (SL) discontinuous reception (DRX) configuration; receiving, from a first device, sidelink control information (SCI) for scheduling of a physical sidelink shared channel (PSSCH) through a physical sidelink control channel (PSCCH), based on a transmission resource; and receiving, from the first device, the MAC PDU through the PSSCH, based on the transmission resource, wherein the transmission resource may be selected from a first available resource set, wherein the first available resource set be determined such that a first ratio related to a first interval is met, wherein a second interval that causes a first ratio related to a second interval to be met and the first interval may be included in a resource selection window in a resource pool, and wherein the first interval may include a first active time of the SL DRX configuration.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: obtain a sidelink (SL) discontinuous reception (DRX) configuration; receive, from a first device, sidelink control information (SCI) for scheduling of a physical sidelink shared channel (PSSCH) through a physical sidelink control channel (PSCCH), based on a transmission resource; and receive, from the first device, the MAC PDU through the PSSCH, based on the transmission resource, wherein the transmission resource may be selected from a first available resource set, wherein the first available resource set may be determined such that a first ratio related to a first interval is met, wherein a second interval that causes a first ratio related to a second interval to be met and the first interval may be included in a resource selection window in a resource pool, and wherein the first interval may include a first active time of the SL DRX configuration.

## ADVANTAGEOUS EFFECTS

The user equipment (UE) may efficiently perform retransmission based on hybrid automatic repeat request (HARQ) feedback.

## BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.

FIG. 7 shows three cast types, based on an embodiment of the present disclosure.

FIGS. 8 and 9 show a method for a UE to perform PPS according to an embodiment of the present disclosure.

FIG. 10 shows a method for a UE to perform CPS, according to an embodiment of the present disclosure.

FIG. 11 shows a procedure for a transmitting UE to select an available resource, according to one embodiment of the present disclosure.

FIG. 12 shows an embodiment in which a transmitting UE determines a plurality of intervals within a sensing window, according to one embodiment of the present disclosure.

FIG. 13 shows a procedure for a first device to perform wireless communication, according to one embodiment of the present disclosure.

FIG. 14 shows a procedure for a second device to perform wireless communication, according to one embodiment of the present disclosure.

FIG. 15 shows a communication system 1, based on an embodiment of the present disclosure.

FIG. 16 shows wireless devices, based on an embodiment of the present disclosure.

FIG. 17 shows a signal process circuit for a transmission signal, based on an embodiment of the present disclosure.

FIG. 18 shows another example of a wireless device, based on an embodiment of the present disclosure.

FIG. 19 shows a hand-held device, based on an embodiment of the present disclosure.

FIG. 20 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDDCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques not specifically described among terms and techniques used in this specification, a wireless communication standard document published before the present specification is filed may be referred to.

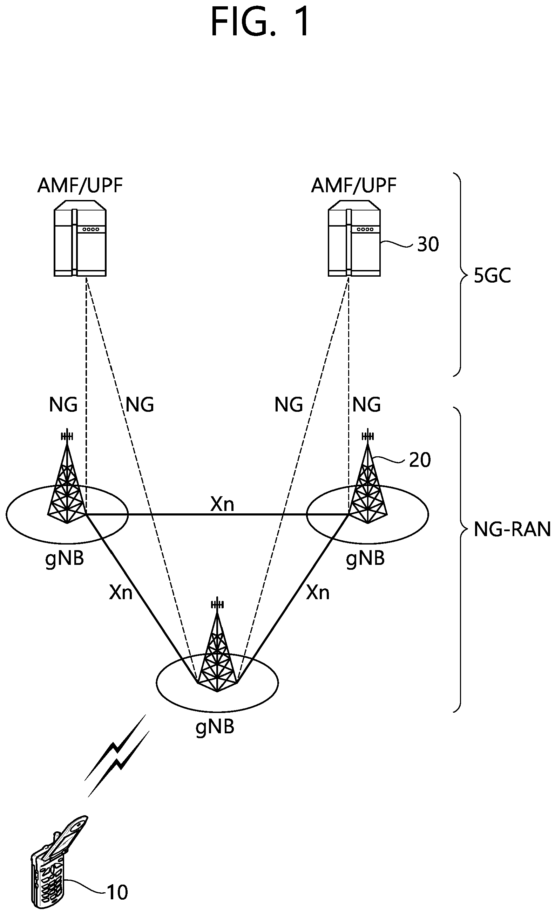

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

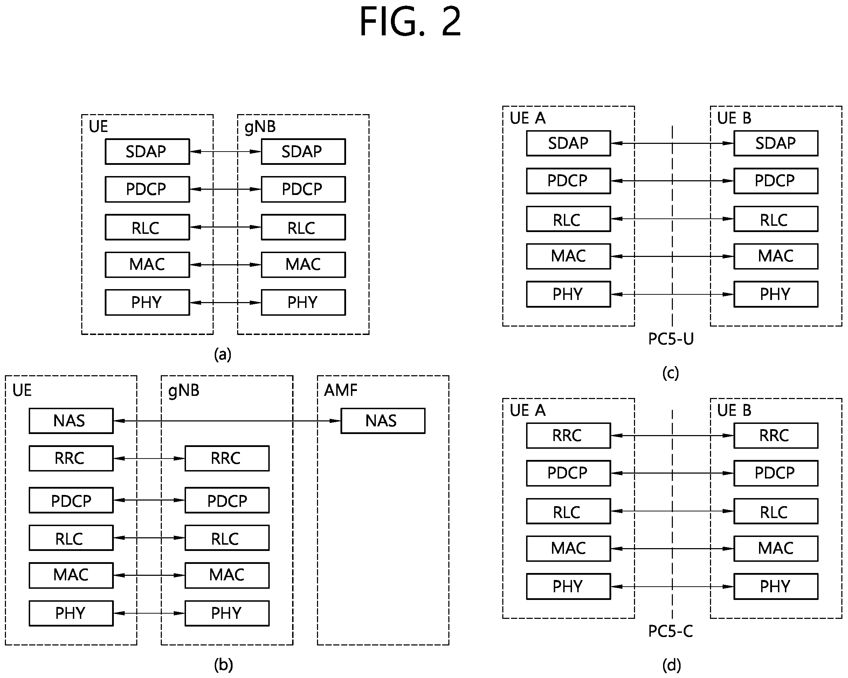

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides a higher layer with an information transfer service through a physical channel. The physical layer is connected to a medium access control (MAC) layer which is a higher layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

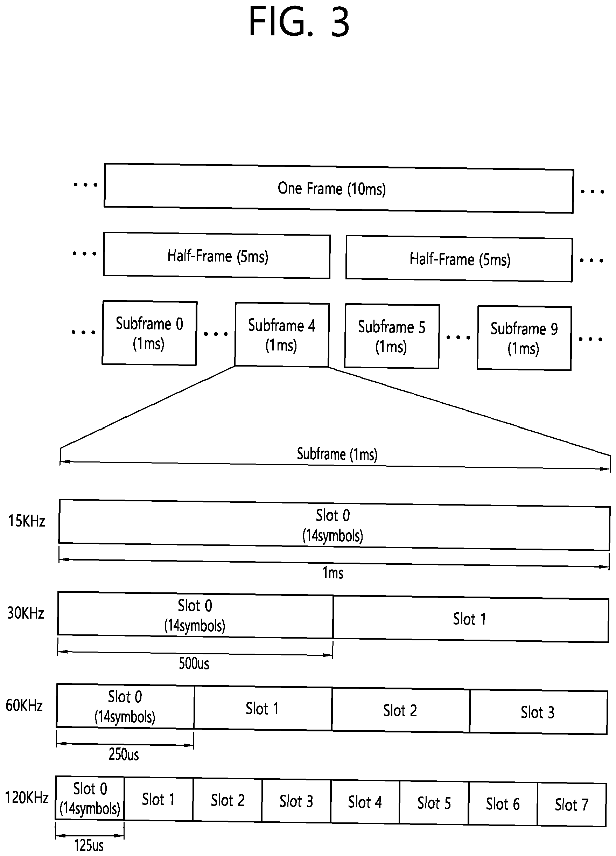

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
| --- | --- | --- |
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
| --- | --- | --- |
| FR1 | 410MHz - 7125MHz | 15, 30, 60kHz |
| FR2 | 24250MHz - 52600MHz | 60, 120, 240kHz |

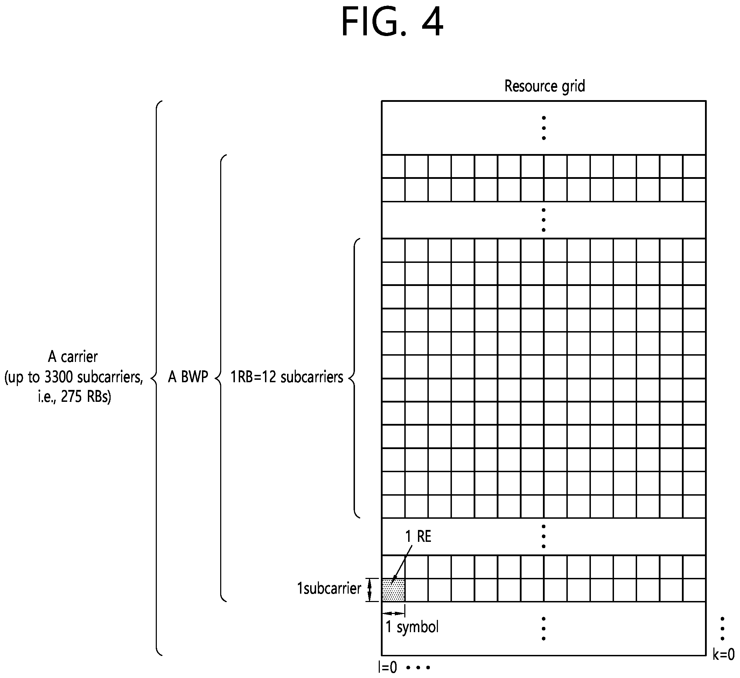

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

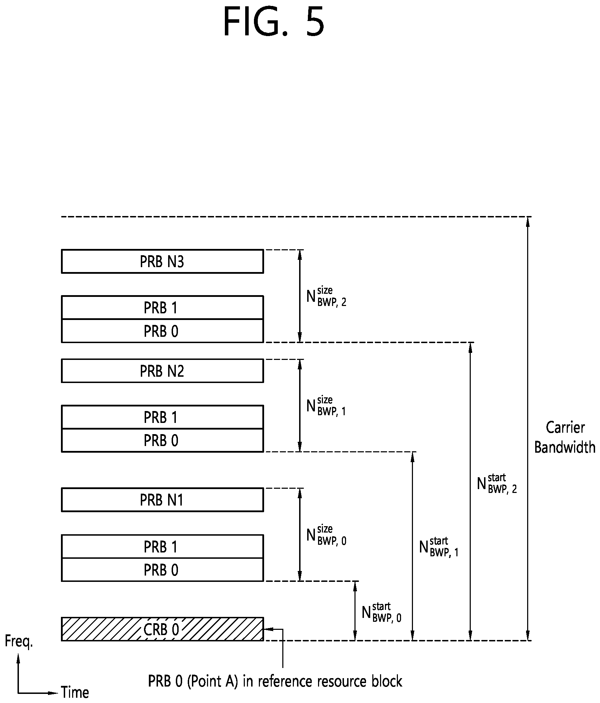

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset NstartBWP from the point A, and a bandwidth NsizeBWP. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

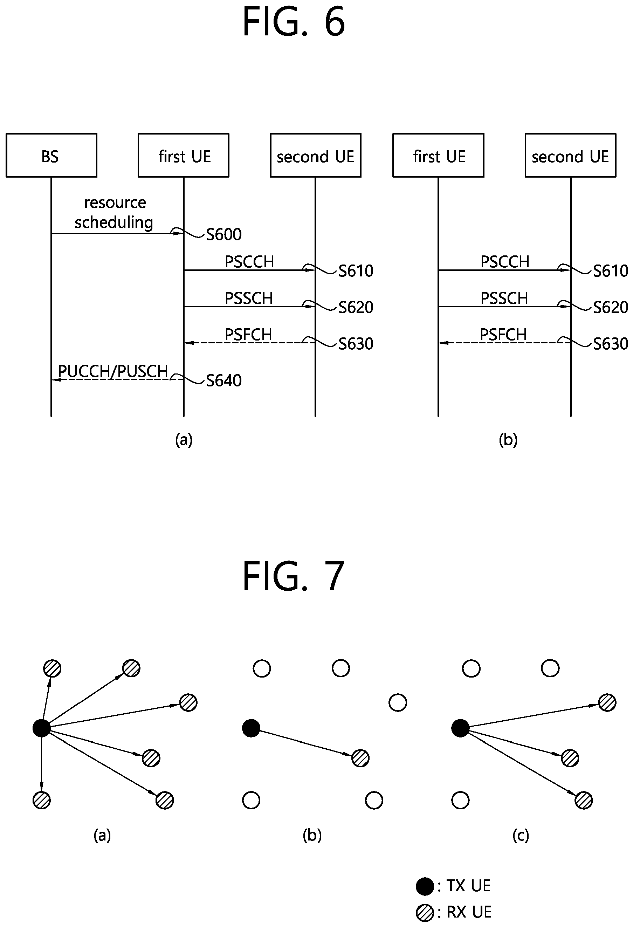

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_Period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three types of casts according to an embodiment of the present disclosure. The embodiment of FIG. 7 may be combined with various embodiments of the present disclosure. Specifically, FIG. 7(a) shows broadcast type SL communication, FIG. 7(b) shows unicast type SL communication, and FIG. 7(c) shows groupcast type SL communication. In the case of unicast type SL communication, a UE may perform one-to-one communication with another UE. In the case of groupcast type SL communication, a UE may perform SL communication with one or more UEs in a group to which the UE belongs. In various embodiments of the present disclosure, SL groupcast communication may be replaced with SL multicast communication, SL one-to-many communication, or the like.

Hereinafter, a UE procedure for determining a subset of resources to be reported to a higher layer in PSSCH resource selection in sidelink resource allocation mode 2 will be described.

In resource allocation mode 2, a higher layer may request a UE to determine a subset of resources, from which the higher layer will select a resource for PSSCH/PSCCH transmission. To trigger this procedure, in slot n, a higher layer provides the following parameters for a PSSCH/PSCCH transmission.

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-ev aluation or pre-emption procedure, the higher layer provides a set of resources ($r_0$, $r_1$, $r_2$, ...) which may be subject to re-evaluation and a set of resources ( $r'_0, r'_1, r'_2, ...$ ) w hich may be subject to pre-emption.
- it is up to UE implementation to determine the subset of resources as requested by higher layers before or after the slot $r''_i$ - $T_3$, where $r''_i$ is the slot with the smallest slot index among ($r_0$, $r_1$, $r_2$, ...) and ( $r'_0, r'_1, r'_2, ...$ ), and $T_3$ is equal to $T^{SL}_{proc,1}$, where $T^{SL}_{proc,1}$ is defined in slots in Table X1, where $\mu_{SL}$ is the SCS configuration of the SL B WP.

Following higher layer parameters affect this procedure:

- *sl-SelectionWindowList:* internal parameter $T_{2min}$ is set to the corresponding valu e from higher layer parameter *sl-SelectionWindowList* for the given value of $prio_{TX}$.
- *sl-Thres-RSRP-List:* this higher layer parameter provides an RSRP threshold for each combination ($p_i$, $p_j$), where $p_i$ is the value of the priority field in a received SCI format 1-A and $p_j$ is the priority of the transmission of the UE selecting resources; for a given invocation of this procedure, $p_j = prio_{TX}$.
- *sl-RS-ForSensing* selects if the UE uses the PSSCH-RSRP or PSCCH-RSRP measurement.
- *sl-ResourceReservePeriodList*
- *sl-SensingWindow:* internal parameter $T_0$ is defined as the number of slots corresp onding to *sl-SensingWindow* msec
- *sl-TxPercentageList:* internal parameter $X$ for a given $prio_{TX}$ is defined as *sl-TxPercentageList ($prio_{TX}$)* converted from percentage to ratio
- *sl-PreemptionEnable:* if *sl-PreemptionEnable* is provided, and if it is not equal to 'enabled', internal parameter $prio_{pre}$ is set to the higher layer provided parameter *sl-PreemptionEnable.*

The resource reservation interval, $P_{rsvp\_TX}$, if provided, is converted from units of msec to units of logical slots, resulting in $P'_{rsvp\_TX}$.

Notation:

( $t'^{SL}_0, t'^{SL}_1, t'^{SL}_2, ...$ ) denotes the set of slots which belongs to the sidelink resource pool.

For example, a UE may select a set of candidate resources ($S_A$) based on Table 8. For example, when resource (re)selection is triggered, a UE may select a set of candidate resources ($S_A$) based on Table 8. For example, when re-evaluation or pre-emption is triggered, a UE may select a set of candidate resources ($S_A$) based on Table 8.

[Table 8]

The following steps are used:

1) A candidate single-slot resource for transmission $R_{x,y}$ is defined as a set of $L_{subCH}$ contiguous sub-channels with sub-channel $x+j$ in slot $t'^{SL}_y$ where $j = 0,..., L_{subCH} - 1$. The UE shall assume that any set of $L_{subcH}$ contiguous sub-channels included in the corresponding resource pool within the time interval $[n + T_1, n + T_2]$ correspond to one candidate single-slot resource, where

- selection of $T_1$ is up to UE implementation under $0 \leq T_1 \leq T^{SL}_{proc,1}$, where $T^{SL}_{proc,1}$ is define d in slots in Table 8.1.4-2 where $\mu_{SL}$ is the SCS configuration of the SL BWP;
- if $T_{2min}$ is shorter than the remaining packet delay budget (in slots) then $T_2$ is up to UE implementation subject to $T_{2min} \leq T_2 \leq$ remaining packet delay budget (in slots); otherw ise $T_2$ is set to the remaining packet delay budget (in slots).

The total number of candidate single-slot resources is denoted by $M_{total}$.

2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i, p_j)$ is set to the corresponding value of RSRP threshold indicated by the i-th field in *sl-Thres-RSRP-List*, where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.
- for any periodicity value allowed by the higher layer parameter *sl-ResourceReservePeriodList* and a hypothetical SCI format 1-A received in slot $t'^{SL}_m$ with '*Resource reservation period*' field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and '*Resource reservation period*' field, if present, and '*Priority*' field in the received SCI format 1-A indicate the values $P_{rsvp\_RX}$ and $prio_{RX}$, respectively according to Clause 16.4 in [6, TS 38.213];

(continued)

The following steps are used:

b) the RSRP measurement performed, according to clause 8.4.2.1 for the received SCI format 1-A, is higher than $Th(prio_{RX}, prio_{TX})$;

c) the SCI format received in slot $t'^{SL}_m$ or the same SCI format which, if and only if the '*Resource reservation period*' field is present in the received SCI format 1-A, is assumed to be received in slot(s) $t'^{SL}_{m+q \times P'_{rsvp\_RX}}$ determines according to clause 8.1.5 the set of resource blocks and slots which overlaps with $R_{x, y+j \times P'_{rsvp\_TX}}$ for q=1, 2, ..., β and j=0, 1, ..., $C_{resel}$ - 1. Here, $P'_{rsvp\_RX}$ is $P_{rsvp\_RX}$ converted to units of logical slots according to clause 8.1.7,

$$Q = \left\lceil \frac{T_{scal}}{P_{rsvp\_RX}} \right\rceil$$

if $P_{rsvp\_RX}$ < $T_{scal}$ and $n' - m \leq P'_{rsvp\_RX}$, where $t'^{SL}_{n'} = n$ if slot n belongs to the set ( $t'^{SL}_0, t'^{SL}_1, \ldots, t'^{SL}_{T'max-1}$ ), otherwise slot $t'^{SL}_{n'}$ is the first slot after slot *n* belonging to the se t ( $t'^{SL}_0, t'^{SL}_1, \ldots, t'^{SL}_{T'max-1}$ ); otherwise Q = 1. $T_{scal}$ is set to selection window size $T_2$ convert ed to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set ($r_0, r_1, r_2, \ldots$) is not a member of $S_A$, then the UE shall report re-evaluation of the resource $r_i$ to higher layers.

If a resource $r'_i$ from the set ( $r'_0, r'_1, r'_2, \ldots$ ) meets the conditions below then the UE shall report pre-emption of the resource $r'_i$ to higher layers

- r/ is not a member of $S_A$, and
- r/ meets the conditions for exclusion in step 6, with $Th(prio_{RX}, prio_{TX})$ set to the final threshold after executing steps 1)-7), i.e. including all necessary increments for reaching $X \cdot M_{total}$, and
- the associated priority $prio_{RX}$, satisfies one of the following conditions:
- sl-PreemptionEnable is provided and is equal to 'enabled' and $prio_{TX} > prio_{RX}$
- sl-PreemptionEnable is provided and is not equal to 'enabled', and $prio_{RX} < prio_{pre}$ and $prio_{TX} > prio_{RX}$

On the other hand, partial sensing may be supported for power saving of a UE. For example, in LTE SL or LTE V2X, a UE may perform partial sensing

In this disclosure, the wordings "set or define" may be interpreted as being (pre)configured by a base station or network (via predefined signaling (e.g., SIB signaling, MAC signaling, RRC signaling). For example, "A may be set" may include "a base station or network (pre)sets/defines or informs a UE of A". Alternatively, the word "set or define" may be interpreted as being preset or predefined by the system. For example, "A may be set" may include "A is preset/predefined by the system".

For example, in various embodiments of the present disclosure, periodic-based partial sensing (PPS) may refer to an operation of performing sensing at a time point corresponding to an integer multiple (k) of each period, based on periods of the number corresponding to a specific configuration value, when performing sensing for resource selection. For example, the periods may be periods of transmission resources configured in a resource pool. For example, a resource at a time point that is earlier by an integer multiple k of each period may be sensed from a time point of a candidate resource that is a target for determining resource conflict. For example, the k value may be configured in a form of a bitmap.

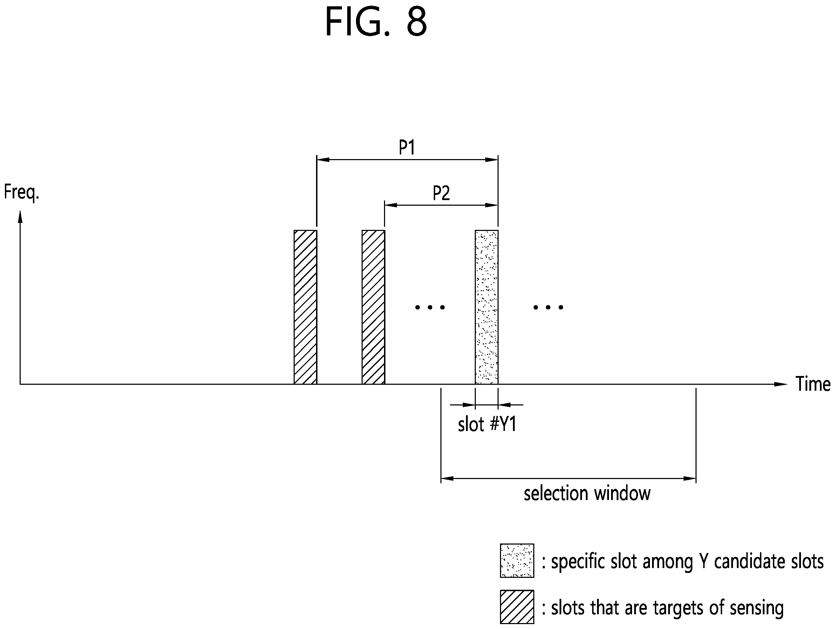

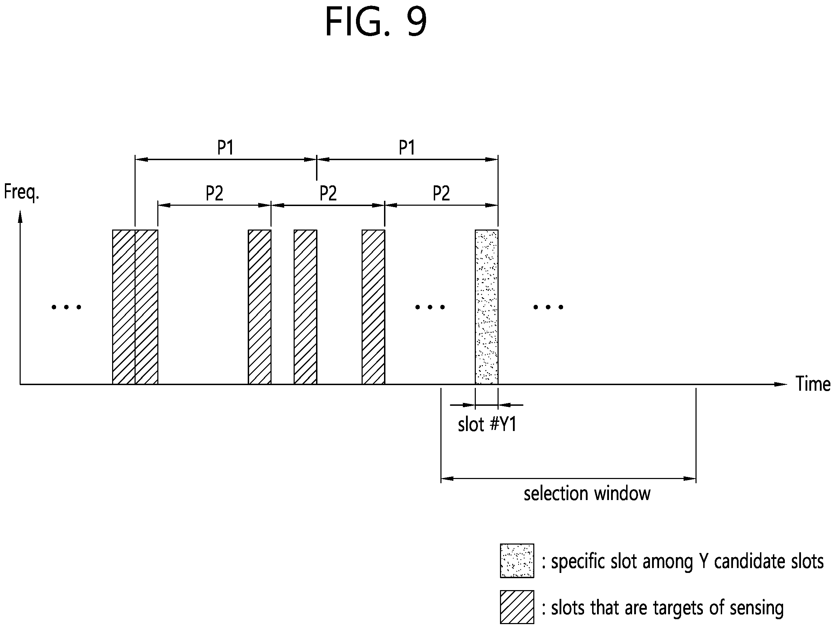

FIGS. 8 and 9 show a method for a UE to perform PPS according to an embodiment of the present disclosure. The embodiments of FIGS. 8 and 9 may be combined with various embodiments of the present disclosure.

Referring to FIGS 8 and 9, it is assumed that a resource reservation period allowed for a resource pool or a resource reservation period configured for PPS is P1 and P2. Furthermore, it is assumed that a UE performs partial sensing (i.e., PPS) for selecting an SL resource in slot #Y1.

Referring to FIG. 8, a UE may perform sensing on a slot positioned before P1 from slot #Y1 and a slot positioned before P2 from slot #Y1.

Referring to FIG. 9, a UE may perform sensing on a slot located before P1 from slot #Y1 and a slot located before P2 from slot #Y1. Furthermore, optionally, a UE may perform sensing on a slot positioned before A * P1 from slot #Y1 and a slot positioned before B * P2 from slot #Y1. For example, A and B may be positive integers of 2 or greater. Specifically, for example, a UE selecting slot #Y1 as a candidate slot may perform sensing for slot #(Y1-resource reservation period *k), and k may be a bitmap. For example, if k is 10001, a UE selecting slot #Y1 as a candidate slot may perform sensing for slot #(Y1-P1*1), slot #(Y1-P1*5), slot #(Y1-P2*1), and slot #(Y1-P2*5).

For example, according to various embodiments of the present disclosure, continuous partial sensing (CPS) may refer to an operation of sensing all or a part of a time domain given as a specific configuration value. For example, CPS may include a short-term sensing operation in which sensing is performed for a relatively short period.

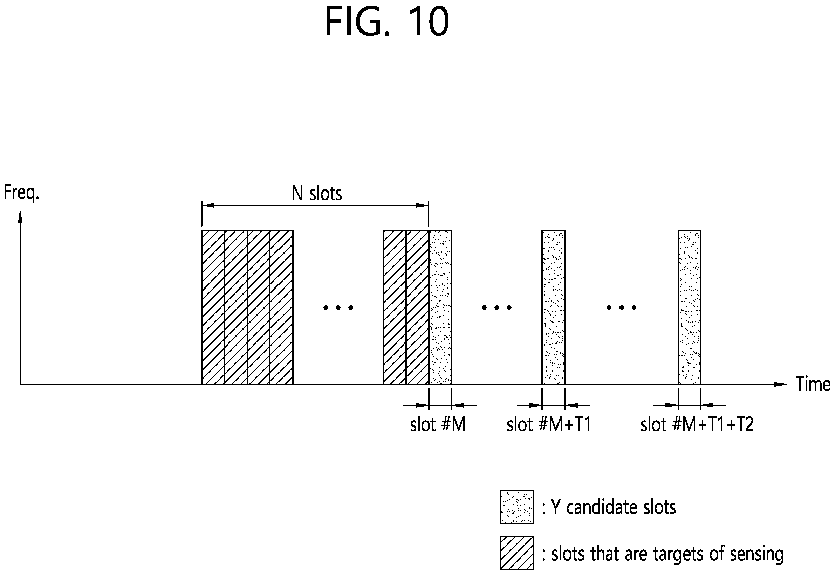

FIG. 10 shows a method for a UE to perform CPS, according to an embodiment of the present disclosure. The embodiment of FIG. 10 may be combined with various embodiments of the present disclosure.

In the embodiment of FIG. 10, it is assumed that Y candidate slots selected by a UE are slot #M, slot #(M+T1), and slot #(M+T1+T2). In this case, a slot in which a UE needs to perform sensing may be determined based on the first slot (i.e., slot #M) among Y candidate slots. For example, after determining the first slot among Y candidate slots as a reference slot, a UE may perform sensing for (previous) N slots from the reference slot.

Referring to FIG. 10, based on the first slot (i.e., slot #M) among Y candidate slots, a UE may perform sensing of N slots. For example, a UE may perform sensing for N slots before slot #M, the UE may select at least one SL resource from in Y candidate slots (i.e., slot #M, slot #(M+T1), and slot #(M+T1+T2)) based on a sensing result. For example, N may be configured or pre-configured for a UE. For example, a time gap for processing may exist between the last slot among the N slots and slot #M.

Referring to the standard document, some procedures and technical specifications related to the present disclosure are as follows.

[Table 9]

| 3GPP TS 36.213 V16.2.0 |
| --- |
| 14.1.1.6          UE procedure for determining the subset of resources to be reported to higher layers in PSSCH resource selection in sidelink transmission mode 4 and in sensing measurement in sidelink transmission mode 3 |
| In sidelink transmission mode 4, when requested by higher layers in subframe n for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and *prio* $_{TX}$ the priority to be transmitted in the associated SCI format 1 by the UE are all provided by higher layers (described in [8]). $C_{resel}$ is determined according to Subclause 14.1.1.4B. |
| In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and *prio* $_{TX}$ are all provided by higher layers (described in [11]). $C_{resel}$ is determined by $C_{resel}$ = 10*SL_RESOURCE _ RESELECTION _ COUNTER, where SL_RESOURCE_ RESELECTION_COUNTER is provided by higher layers [11]. <br> ... <br> If partial sensing is configured by higher layers then the following steps are used: |

(continued)

3GPP TS 36.213 V16.2.0

1) A candidate single-subframe resource for PSSCH transmission $R_{x,y}$ is defined as a set of $L_{subCH}$ contiguous sub-channels with sub-channel $x+j$ in subframe $t_y^{SL}$ where $j = 0,...,$ $L_{subCH}-1$. The UE shall determine by its implementation a set of subframes which consists of at least Y subframes within the time interval $[n + T_1, n + T_2]$ where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement and Y shall be greater than or equal to the high layer parameter *minNumCandidateSF*. The UE shall assume that any set of $L_{subCH}$ contiguous sub-channels included in the corresponding PSSCH resource pool (described in 14.1.5) within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where $i = (a - 1) * 8 + b$.

4) The set $S_A$ is initialized to the union of all the candidate single-subframe resources. The set $S_B$ is initialized to an empty set.

[Table 10]

| |
| --- |
| 5) The UE shall exclude any candidate single-subframe resource $R_{x,y}$ from the set $S_A$ if it meets all the following conditions: |
|    - the UE receives an SCI format 1 in subframe $t_m^{SL}$, and "Resource reservation" field and "Priority" field in the received SCI format 1 indicate the values $P_{rsvp\_RX}$ and $prio_{RX}$, respectively according to Subclause 14.2.1.<br>   - PSSCH-RSRP measurement according to the received SCI format 1 is higher than $Th_{prioTX,prioRX}$. |

(continued)

<table>
<tr><td>

- the SCI format received in subframe $t_m^{SL}$ or the same SCI format 1 which is assumed to be received in subframe(s) $t_{m+q \times P_{step} \times P_{rsvp\_RX}}^{SL}$ determines according to 14.1.1.4C the set of resource blocks and subframes which overlaps with $R_{x,y+j \times P'_{rsvp\_TX}}$ for q=1, 2, ..., Q

$$Q = \frac{1}{P'_{rsvp\_RX}}$$

and j=0, 1, ..., $C_{resel}$-1. Here, if $P_{rsvp\_RX} < 1$ and

y' - m $\leq P_{step} \times P_{rsvp\_RX} + P_{step}$ , where $t_{y'}^{SL}$ is the last subframe of the Y subframes , and Q = 1 otherwise.

6) If the number of candidate single-subframe resources remaining in the set $S_A$ is smaller than 0.2·$M_{total}$, then Step 4 is repeated with $Th_{a,b}$ increased by 3 dB.

7) For a candidate single-subframe resource $R_{x,y}$ remaining in the set $S_A$, the metric $E_{x,y}$ is defined as the linear average of S-RSSI measured in sub-channels x+k for k =0,...,$L_{subCH}$-1 in the monitored subframes in Step 2 that can be expressed by $t_{y-P_{step}*j}^{SL}$ for a non-negative integer j.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to 0.2·$M_{total}$.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time [10].

The UE shall report set $S_B$ to higher layers.
</td></tr>
</table>

[Table 11]

<table>
<tr><td>
The UE shall report set $S_B$ to higher layers.

If transmission based on random selection is configured by upper layers and when the UE is configured by upper layers to transmit using resource pools on multiple carriers, the following steps are used:
</td></tr>
</table>

(continued)

1) A candidate single-subframe resource for PSSCH transmission $R_{x,y}$ is defined as a set of $L_{subCH}$ contiguous sub-channels with sub-channel $x+j$ in subframe $t_y^{SL}$ where $j=0,...,L_{subCH}-1$. The UE shall assume that any set of $L_{subCH}$ contiguous sub-channels included in the corresponding PSSCH resource pool (described in 14.1.5) within the time interval $[n+T_1,n+T_2]$ corresponds to one candidate single-subframe resource, where selections of $T_1$ and $T_2$ are up to UE implementations under $T_1 \leq 4$ and $T_{2min}(prio_{TX}) \leq T_2$; $\leq 100$, if $T_{2minn}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{x,y}$ from the set $S_A$ to $S_B$.

4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time [10].

The UE shall report set $S_B$ to higher layers.

[Table 12]

3GPP TS 36.213 V16.5.0

## 8.5 UE procedure for reporting channel state information (CSI)

### 8.5.1 Channel state information framework

CSI consists of Channel Quality Indicator (CQI) and Rank Indicator (RI). The CQI and RI are always reported together.

### 8.5.1.1 Reporting configurations

The UE shall calculate CSI parameters (if reported) assuming the following dependencies between CSI parameters (if reported)

- CQI shall be calculated conditioned on the reported RI

The CSI reporting can be aperiodic (using [10, TS 38.321]). Table 8.5.1.1-1 shows the supported combinations of CSI reporting configurations and CSI-RS configurations and how the CSI reporting is triggered for CSI-RS configuration. Aperiodic CSI-RS is configured and triggered/activated as described in Clause 8.5.1.2.

**Table 8.5.1.1-1 Triggering/Activation of CSI reporting for the possible CSI-RS Configurations.**

| CSI-RS Configuration | Aperiodic CSI Reporting |
|---|---|
| Aperiodic CSI-RS | Triggered by SCI. |

For CSI reporting, reporting is wideband CQI is reported for a single codeword for the entire CSI reporting band.

wideband CQI supported. A

### 8.5.1.2 Triggering of sidelink CSI reports

The CSI-triggering UE is not allowed to trigger another aperiodic CSI report for the same UE before the last slot of the expected reception or completion of the ongoing aperiodic CSI report associated with the SCI

format 2-A with the '*CSI request*' field set to 1, where the last slot of the expected reception of the ongoing aperiodic CSI report is given by [10, TS38.321].

An aperiodic CSI report is triggered by an SCI format 2-A with the '*CSI request*' field set to 1.

A UE is not expected to transmit a sidelink CSI-RS and a sidelink PT-RS which overlap.

[Table 13]

| 3GPP TS 36.321 V16.4.0 |
|---|

5.22.1.7                                                                                            CSI Reporting

The Sidelink Channel State Information (SL-CSI) reporting procedure is used to provide a peer UE with sidelink channel state information as specified in clause 8.5 of TS 38.214 [7].

RRC configures the following parameters to control the SL-CSI reporting procedure:

    - *sl-LatencyBound-CSI-Report,* which is maintained for each PC5-RRC connection.

The MAC entity maintains a *sl-CSI-ReportTimer* for each pair of the Source Layer-2 ID and the Destination Layer-2 ID corresponding to a PC5-RRC connection. *sl-CSI-ReportTimer* is used for a SL-CSI reporting UE to follow the latency requirement signalled from a CSI triggering UE. The value of *sl-CSI-ReportTimer* is the same as the latency requirement of the SL-CSI reporting in *sl-LatencyBound-CSI-Report* configured by RRC.

The MAC entity shall for each pair of the Source Layer-2 ID and the Destination Layer-2 ID corresponding to a PC5-RRC connection which has been established by upper layers:

    1> if the SL-CSI reporting has been triggered by a SCI and not cancelled:

        2> if the *sl-CSI-ReportTimer* for the triggered SL-CSI reporting is not running:

            3> start the *sl-CSI-ReportTimer.*

        2> if the *sl-CSI-ReportTimer* for the triggered SL-CSI reporting expires:

            3> cancel the triggered SL-CSI reporting.

        2> else if the MAC entity has SL resources allocated for new transmission and the SL-SCH resources can accommodate the SL CSI reporting MAC CE and its subheader as a result of logical channel prioritization:

            3> instruct the Multiplexing and Assembly procedure to generate a Sidelink CSI Reporting MAC CE as defined in clause 6.1.3.35;

            3> stop the *sl-CSI-ReportTimer* for the triggered SL-CSI reporting;

            3> cancel the triggered SL-CSI reporting.

        2> else if the MAC entity has been configured with Sidelink resource allocation mode 1:

            3> trigger a Scheduling Request.

        NOTE:    The MAC entity configured with Sidelink resource allocation mode 1 may trigger a Scheduling Request if transmission of a pending SL-CSI reporting with the sidelink grant(s) cannot fulfil the latency requirement associated to the SL-CSI reporting.

On the other hand, existing partial sensing operation does not define a operation that excludes resources from partial sensing operation, so resource conflicts are not efficiently avoided when allocating resources based on partial sensing.

According to one embodiment of the present disclosure, a method for excluding resources for transmission conflict avoidance from an operation that allocates resources based on partial sensing, and a device that supports the method are proposed.

For example, for (or, for each of) at least one among elements/parameters of service type (and/or (LCH or service) priority and/or QOS requirements (e.g., latency, reliability, minimum communication range) and/or PQI parameters) (and/or HARQ feedback enabled (and/or disabled) LCH/MAC PDU (transmission) and/or CBR measurement value of a resource pool and/or SL cast type (e.g., unicast, groupcast, broadcast) and/or SL groupcast HARQ feedback option (e.g., NACK only feedback, ACK/NACK feedback, NACK only feedback based on TX-RX distance) and/or SL mode 1 CG type (e.g., SL CG type 1/2) and/or SL mode type (e.g., mode 1/2) and/or resource pool and/or PSFCH resource configured resource pool and/or source (L2) ID (and/or destination (L2) ID) and/or PC5 RRC connection/link and/or SL link and/or (with base station) connection state (e.g., RRC connected state, IDLE state, inactive state) and/or whether an SL HARQ process (ID) and/or (of a transmitting UE or a receiving UE) performs an SL DRX operation and/or whether it is a power saving (transmitting or receiving) UE and/or (from the perspective of a specific UE) case when PSFCH transmission and PSFCH reception (and/or a plurality of PSFCH transmissions (exceeding UE capability)) overlap (and/or a case where PSFCH transmission (and/or PSFCH reception) is omitted) and/or a case where a receiving UE actually (successfully) receives a PSCCH (and/or PSSCH) (re)transmission from a transmitting UE, etc.), whether the rule is applied (and/or the proposed method/rule-related parameter value of the present disclosure) may be specifically (or differently or independently) configured/allowed. In addition, in the present disclosure, "configuration" (or "designation") wording may be extended and interpreted as a form in which a base station informs a UE through a predefined (physical layer or higher layer) channel/signal (e.g., SIB, RRC, MAC CE) (and/or a form provided through pre-configuration and/or a form in which a UE informs other UEs through a predefined (physical layer or higher layer) channel/signal (e.g., SL MAC CE, PC5 RRC)), etc. In addition, in this disclosure, the "PSFCH" wording may be extended and interpreted as "(NR or LTE) PSSCH (and/or (NR or LTE) PSCCH) (and/or (NR or LTE) SL SSB (and/or UL channel/signal))". And, the methods proposed in the present disclosure may be used in combination with each other (in a new type of manner).

For example, the term "specific threshold" below may refer to a threshold value defined in advance or (pre-)configured by a higher layer (including an application layer) of a network, a base station, or a UE. Hereinafter, the term "specific configuration value" may refer to a value defined in advance or (pre-)configured by a higher layer (including an application layer) of a network, a base station, or a UE. Hereinafter, "configured by a network/base station" may mean an operation in which a base station configures (in advance) a UE by higher layer RRC signaling, configures/signals a UE through MAC CE, or signals a UE through DCI.

Hereinafter, PPS (or PBPS) means periodic-based partial sensing, and may mean an operation of performing sensing at a time point corresponding to an integer multiple (k) of each period based on periods of a specific configuration value number when sensing for resource selection is performed. For example, the periods may be a period of the transmission resource configured in a transmission pool, a resource of an integer multiple (k value) of each period before the candidate resource time, which is a target for determining resource conflict in time, may be sensed, the k value may be configured in a form of a bitmap. Hereinafter, CPS may mean continuous partial sensing, and may mean an operation of sensing all or a part of a time domain given as a specific configuration value. For example, CPS may include a short-term sensing (STS) operation in which sensing is performed for a relatively short period.

Hereinafter, partial sensing may refer to partial sensing comprising the PPS operation and/or the CPS operation.

For example, hereafter, REV may refer to resource re-evaluation and PEC may refer to resource pre-emption checking.

In the following, for example, "candidate resource/slot" may refer to a resource selected by a UE to perform partial sensing when transmission resource selection is first triggered to transmit an arbitrary packet, wherein the UE selects a resource selection window to perform partial sensing and detects whether a resource conflict is detected within the resource selection window. As used herein, for example, "available resource/slot" may mean a resource that is reported to the medium access control (MAC) layer from the physical (PHY) layer based on the partial sensing, wherein no resource conflicts are detected among the candidate resources and thus the resource is determined to be available for transmission. Hereinafter, for example, "transmission resource/slot" may refer to a resource that is finally selected by the MAC layer for use in a sidelink transmission from among the reported resources.

According to one embodiment of the present disclosure, for each of the selected candidate resources in the resource selection window, based on a transmission period for partial sensing configured to all or part of a transmission period configured in the resource pool, if partial sensing is enabled for the resource pool and periodic transmission is allowed, for each selected candidate resource within the resource selection window, if a UE has performed monitoring of the sensing occasion(s) of the (most recent) K integer times preceding the (most recent) sensing occasion(s) (including the nearest sensing occasion) (set to a specific set value) from each of the candidate resources, the UE may exclude the candidate/available/transmission resource based on the partial sensing results according to the following operation

For example, for all the sensing occasions to perform partial sensing for any one candidate resource A, if (and only if) the monitoring could not be performed due to the UE's UL transmission or other SL transmission, the UE may exclude the candidate resource A (or only A) as an available/transmission resource.

For example, for all the sensing occasions to perform partial sensing for any one candidate resource A, if (and only if) a UE fails to perform monitoring due to UL transmissions or other SL transmissions of the UE, the UE may exclude the candidate resource A and the candidate resources corresponding to time points lagging from the candidate resource A by an integer multiple less than or equal to all (or, some) transmission periods configured in the resource pool or an integer L of transmission periods for the partial sensing from available/transmission resources.

For example, if one or more sensing occasions to perform partial sensing for any one candidate resource A are not monitored due to UE's UL transmission or other SL transmission, a UE may exclude the candidate resource A (or only A) from available/transmission resources.

For example, if one or more sensing occasions to perform partial sensing for any one candidate resource A are not monitored due to UE's UL transmissions or other SL transmissions, a UE may exclude the candidate resource A and the candidate resources corresponding to time points lagging from the candidate resource A by an integer multiple less than or equal to all (or some) of the transmission periods configured in the resource pool or an integer L of transmission periods for the partial sensing from available/transmission resources.

For example, if one or more sensing occasions to perform partial sensing for any one candidate resource A are not monitored due to a UE's UL transmission or other SL transmission, the UE may exclude the candidate resource corresponding to time points lagging from the candidate resource A by an integer, which is less than or equal to an integer L, multiple of the transmission period for the partial sensing for which the monitoring was not performed from available/transmission resources.

For example, for any one candidate resource A, if more than a specific threshold number of sensing occasions to perform partial sensing are not monitored due to UE's UL transmissions or other SL transmissions, the UE may exclude the candidate resource A (or only A) from available/transmission resources.

For example, for a specific threshold number of sensing occasions to perform partial sensing for any one candidate resource A, if a UE fails to perform monitoring due to UL transmissions or other SL transmissions, the UE may exclude the candidate resource A and the candidate resources corresponding to time points lagging from the candidate resource A by all (or some) of the transmission periods configured in the resource pool, or by an integer, which is less than or equal to an integer L, multiple of the transmission periods for the partial sensing, from available/transmission resources.

For example, if a specific threshold number of sensing occasions to perform partial sensing for any one candidate resource A has not been monitored due to UE's UL transmissions or other SL transmissions, the UE may exclude the candidate resource A and the candidate resources corresponding to time points lagging from the candidate resource A by an integer, which is less than or equal to an integer L, multiple of the transmission periods for partial sensing for which the monitoring has not been performed from available/transmission resources.

For example, for any one monitoring occasion B where partial sensing has been performed for any one candidate resource A, if a transmission resource of another UE is detected in the monitoring occasion B, the UE may exclude the candidate resource A (or only A) from available/transmission resources.

For example, for any one monitoring occasion B in which partial sensing has been performed on any one candidate resource A, if another UE's transmission resource is detected in the monitoring occasion B, the UE may exclude the candidate resources corresponding to time points lagging from the time point of the candidate resource A and time points lagging from the time point of the candidate resource A or time points lagging from the time point of the monitoring occasion B by an integer, which is less than or equal to an integer L, multiples of the transmission period for partial sensing linked to the time point of the monitoring occasion B, from available/transmission resources.

For example, for any one monitoring occasion B in which partial sensing is performed for any one candidate resource A, if a transmission resource of another UE is detected at the monitoring occasion B, the UE may exclude the candidate resources corresponding to time points lagging from the time point of the monitoring occasion B by an integer, which is less than or equal to an integer L, multiple of a transmission resource reservation period, based on the transmission resource reservation period signaled by SCI transmitted by the other UE received at the time point of the monitoring occasion B, from available/transmission resources.

For example, for any one monitoring occasion B in which partial sensing is performed for any one candidate resource A, if a transmission resource of another UE is detected at the monitoring occasion B, the UE may exclude the first candidate resource (or only the candidate resource) among the candidate resources corresponding to time points lagging from the time point of the monitoring occasion B by an integer, which is less than or equal to an integer L, multiple of a transmission resource reservation period, based on the transmission resource reservation period signaled via SCI transmitted by the other UE received at the time point of the monitoring occasion B, from available/transmission resources.

For example, the integer L may be a maximum integer value that is not greater than (or a minimum integer value that is not less than) a value derived by dividing a resource selection window length or a region of candidate resources (i.e., a time region from the first candidate resource to the last candidate resource) by all (or some) transmission periods configured for the resource pool or a transmission period for the partial sensing or transmission periods for partial sensing for which the monitoring was not performed.

For example, the integer L value may be a value set to a specific threshold by the network or higher layer.

According to various embodiments of the present disclosure, when a UE allocates resources based on partial sensing, it has the effect of avoiding transmission conflicts as much as possible by excluding resources subject to transmission conflicts.

According to one embodiment of the present disclosure, when a power saving UE performs SL-DRX operation and simultaneously performs partial sensing-based resource allocation, the transmitting UE performing the operation may select a transmission resource considering the SL-DRX configuration of a receiving UE, as follows

For example, a transmitting UE may perform an initial transmission and some retransmissions of the packet to be transmitted within the ON duration or active duration (hereinafter referred to as the Running Active Time (RAT)) of a receiving UE at the time point when resource selection for packet transmission is triggered. And, based on the initial transmission and some retransmissions, expecting that in the future the receiving UE will extend its active duration by an "Extension Time Unit (ETU)" set to a specific threshold value (e.g., the ETU may be determined based on a retransmission timer value of the receiving UE), the transmitting UE may perform the remaining retransmissions, excluding the initial transmission and some retransmissions, in the expected extended active duration (hereinafter referred to as Extended Active Time (EAT)).

According to one embodiment of the present disclosure, when the (re)transmission resource selection is triggered, a transmitting UE may perform the resource selection procedure in the following manner based on the SL DRX configuration of the receiving UE performing the SL DRX operation.

For example, the MAC layer of a transmitting UE may trigger a (re)transmission resource selection operation to the PHY layer to select and report to the transmission resources that meet the target transmission resource ratio, determined by a specific threshold value X1, within a interval P1 determined by a specific set value including a RAT based on the SL DRX configuration of the receiving UE. For example, the PHY layer of the transmitting UE may, when the operation is triggered, select and report to the MAC layer the available resources such that the X1 resource ratio is met within the interval P1, and the MAC layer may randomly select from among the available resources reported by the PHY layer transmission resources that are less than or equal to a specific threshold value.

And, for example, the MAC layer may expect the EAT interval to be extended by the receiving UE, based on the last resource or the resource determined by a specific set value among the transmission resources selected in the P1 interval, and may trigger a (re)transmission resource selection operation of the PHY layer to select and report a transmission resource that meets the target transmission resource ratio determined by a specific threshold X2 within an interval P2 determined by a specific set value that includes the EAT interval. In this case, for example, the P2 interval may be determined not to include the P1 interval to avoid overlapping resource selection intervals with previous resource selection intervals, or may include the P1 interval to maximize flexibility of resource selection. For example, the PHY layer of the transmitting UE may, when the operation is triggered, select and report to the MAC layer available resources within the P2 interval such that the X2 resource ratio is met, and the MAC layer may randomly select transmission resources from among the available resources reported by the PHY layer that are less than or equal to a specific threshold value.

And, for example, the MAC layer may expect an EAT interval to be extended by the receiving UE, based on the last resource or a resource determined by a specific set value among the selected transmission resources in the interval P2, and may trigger a (re)transmission resource selection operation of the PHY layer to select and report a transmission resource that meets a target transmission resource ratio determined by a specific threshold X3 within an interval P3 determined by a specific set value that includes the EAT interval.

For example, the above operation may be repeated iteratively until the X1+X2+X3+...+XN value is finally greater than or equal to a value X of the target transmission resource ratio to be selected by the transmitting UE, and/or the PN interval linked to the XN is limited to within a PDB of the packet to be transmitted. For example, the Pn interval belonging to each of the P1, P2, ..., PN intervals may include all (or some) of the Pm intervals for values m less than n, or each of the P1, P2, ..., PN intervals may be configured such that they do not overlap with each other. For example, the MAC layer may preferentially select an available resource belonging to a set of available resources belonging to the P1 interval as the final transmission resource. For example, the MAC layer may preferentially select a specific threshold number or more of resources among available resources belonging to the available resource set belonging to the P1 interval as the final transmission resource.

According to one embodiment of the present disclosure, the MAC layer of a transmitting UE may trigger the (re)transmission resource selection of the PHY layer to report a plurality of available resource sets (S1, S2, ..., SM), by dividing the resource selection window into M intervals (P1, P2, ..., PM), and separately setting a target resource ratio (X1, X2, ..., XM) for each interval. In this case, for example, the length of each of the intervals may be set equal to a time interval set to a specific set value, or the length of the interval may be set separately for each of the intervals to a specific set value. Further, for example, each of the X1, X2, ..., XM may be set the same for each of the time intervals with a specific set value, or each of the intervals may be set separately with a specific set value.

For example, the PHY layer may, when the (re)transmission resource selection is triggered, select available resources that meet the respective resource ratios (X1, X2, ..., XM) for each of the intervals (P1, P2, ..., PM) and report a plurality of available resource sets (S1, S2, ..., SM) to the MAC layer. In the procedure of selecting resources to meet the resource ratio for each of the above intervals, a common RSRP threshold value initialized to a specific set value may be used, or the RSRP threshold value may be adjusted independently for each of the above intervals, based on an initial value of a separate RSRP threshold value determined to a specific set value for each of the above intervals.

For example, at least one particular interval of each of the intervals may be configured to include the RAT of the receiving UE itself. For example, the MAC layer may preferentially select as the final transmission resource an available resource belonging to the set of available resources belonging to the specific interval including the RAT interval. For example, the MAC layer may preferentially select as the final transmission resources a specific threshold number or more of the available resources belonging to the set of available resources belonging to the specific interval including the RAT interval. For example, the specific interval may be the P1 interval that is temporally fastest among the respective intervals. For example, the sum of each of the resource ratios (X1, X2, ..., XM) may be configured to be greater than or equal to a resource ratio X set for the entire resource selection window interval. For example, the sum of each of the above time intervals P1, P2, ..., PM may be configured to be less than or equal to the PDB for the packet to be transmitted.

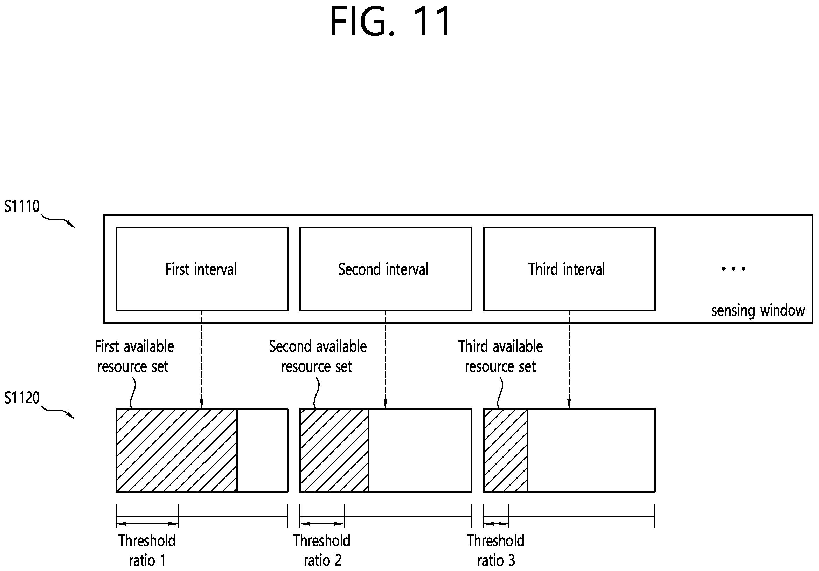

FIG. 11 shows a procedure for a transmitting UE to select an available resource, according to one embodiment of the present disclosure. The embodiment of FIG. 11 may be combined with various embodiments of the present disclosure.

Referring to FIG. 11, in step S1110, a transmitting UE may determine a plurality of intervals within a sensing window. For example, the plurality of intervals may include the first interval, the second interval, and the third interval.

In step S1120, the transmitting UE may determine a set of available resources, based on a threshold ratio determined for each interval. For example, referring to FIG. 11, the threshold ratio determined for the first interval may be threshold ratio 1, the threshold ratio determined for the second interval may be threshold ratio 2, and the threshold ratio determined for the third interval may be threshold ratio 3. Further, the intercepted region may represent a percentage of the resources in each interval that are selected as available resources. For example, the transmitting UE may determine the first available resource set such that a percentage of the first available resource set of the total resources in the first interval is greater than or equal to the threshold ratio 1. For example, the transmitting UE may determine the second available resource set such that a percentage of the second available resource set of the total resources in the second interval is greater than or equal to the threshold ratio 2. For example, the transmitting UE may determine the third available resource set such that a percentage of the third available resource set of the total resources in the third interval is greater than or equal to the threshold ratio 3.

For example, the threshold ratio for a lagging interval may be smaller than the threshold ratio for a leading interval.

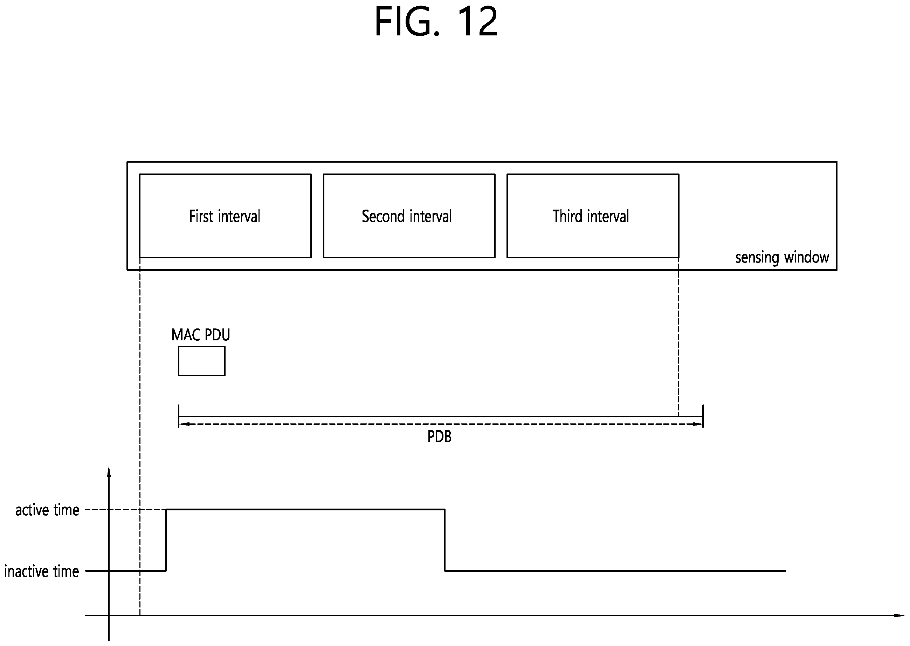

FIG. 12 shows an embodiment in which a transmitting UE determines a plurality of intervals within a sensing window, according to one embodiment of the present disclosure. The embodiment of FIG. 12 may be combined with various embodiments of the present disclosure.

Referring to FIG. 12, a transmitting UE may determine the first to third intervals within a sensing window for determining a transmission resource for transmitting a MAC PDU. For example, the transmitting UE may determine the first to third intervals such that the sum of the time lengths of the first to third intervals is less than the PDB related to the MAC PDU. For example, the transmitting UE may determine the first to third intervals such that at least one of the first to third intervals includes the RAT of the receiving UE. Referring to FIG. 12, it is shown that the transmitting UE has determined that the sum of the time lengths of the first to third intervals is less than the PDB related to the MAC PDU, and that the transmitting UE has determined that the first interval and the second interval include an active time of the receiving UE. Here, for example, the active time may be a RAT or an EAT as described in the present disclosure.

According to one embodiment of the present disclosure, a target resource ratio X set to a specific threshold value within the entire resource selection window and an RSRP threshold value used in the resource selection procedure may be configured. And, for example, a target resource ratio Xmin that is set to a specific threshold value and an RSRP minimum threshold value may be set separately for a time interval that is additionally determined (by the MAC layer) to a specific set value that includes the RAT of the receiving UE.

For example, when a (re)transmission resource selection is triggered by the MAC layer, the PHY layer may report to the MAC layer both an available resource set S that meets the resource ratio X within the resource selection window and an available resource set Smin that further meets the resource ratio X within the resource selection window while simultaneously meeting the Xmin resource ratio condition in a specific time interval comprising the RAT within the resource selection window. For example, the MAC layer may, among the two reported available resource sets S and Smin, preferentially select a resource belonging to the RAT of the receiving UE among the Smin resources as the final transmission resource. For example, the MAC layer may preferentially select, among the Smin resources, a specific threshold number or more of the resources belonging to the RAT of the receiving UE as the final transmission resources.

According to various embodiments of the present disclosure, by a transmission resource being selected adaptably based on the SL DRX configuration of the receiving UE when the UE performing the SL DRX operation selects the transmission resource based on partial sensing, the effect of maximizing resource usage efficiency and minimizing channel congestion is achieved.

According to one embodiment of the present disclosure, when partial sensing is enabled in a resource pool for which periodic transmissions are allowed and a UE has triggered a (re)transmission resource for periodic transmissions, the UE may configure a resource selection window and configure Y candidate slots that are greater than or equal to at least Ymin set as a specific threshold within the resource selection window. And, the UE may perform both PPS and CPS to detect resource conflicts for the candidate slots. In the above-described operation, the UE may select a (re)transmission resource for the periodic transmission by the following operation.

For example (embodiment 1), a UE initially limits the candidate resources (or, the initial candidate resource set, S_A) that can be available resources to all or some of the candidate resources included in the Y candidate slots, and for all or some of the transmission periods configured for the resource pool configured for performing the PPS for each of the Y candidate slots, if not all of the required sensing occasions corresponding to an integer multiple of the transmission period for the PPS with respect to each of the Y candidate slots have been performed, the corresponding candidate slot may be excluded from the candidate resource (S_A) or transmission resources. For example, simultaneously and/or in parallel, the UE may exclude a candidate slot for which a resource conflict is detected based on the CPS for the Y candidate slots from the candidate resource S_A or final transmission resources.

For example, (embodiment 2) in the case of embodiment 1 above, e.g., after completing both the PPS and the CPS, if the number of remaining available resources excluding the excluded resources is not less than Ymin or not less than a specific threshold value, the PHY layer of the UE may perform the PPS and report the remaining available resources S_A to the MAC layer.

For example, (embodiment 3) in the case of embodiment 1 above, e.g., if the number of remaining available resources after performing the PPS and CPS is less than the Ymin or less than a specific threshold value, the UE may include the available resources, in addition to the remaining available resources, among the resources for which a resource conflict can be detected based on the CPS result within the resource selection window, excluding the Y candidate slots for which no resource conflict is detected.

For example, (embodiment 4) in the case of example 3 above, if the total number of available resources belonging to the union of the available resources remaining based on the PPS and CPS and the available resources remaining based on the result of the CPS is not less than Ymin or not less than a specific threshold, the PHY layer of the UE may report the total available resources (S_A) belonging to the union to the MAC layer.

For example, (embodiment 5) in the case of embodiment 3 above, if, for example, the total number of available resources belonging to the union of the available resources remaining based on the PPS and the available resources remaining based on the CPS is less than the Ymin and/or less than a specific threshold, the available resources remaining based on the PPS and the candidate resources excluded based on the CPS may again be included in the available resources based on sensing occasions that were not monitored when performing the PPS or the CPS in conflict with the UE's transmission timing.

For example, (embodiment 6) in the case of embodiment 5 above, for example, after re-including the excluded candidate resources based on the non-monitored slots back into the available resources, if the total number of available resources belonging to the union of the available resources remaining based on the PPS and the available resources remaining based on the CPS result is not less than the Ymin or not less than a specific threshold, the PHY layer of the UE may report the total number of available resources belonging to the union to the MAC layer.

For example, (embodiment 7) in the case of embodiment 5 above, for example, after re-including the excluded candidate resources based on the non-monitored slots back into the available resources, if the total number of available resources belonging to the union of the available resources remaining based on the PPS and the available resources remaining based on the result of the CPS is less than the Ymin or less than a specific threshold, the UE may randomly select an available resource or a transmission resource from the resource pool if random resource selection is allowed in the resource pool.

For example, (embodiment 8) in the case of embodiment 5 above, for example, after re-including the excluded candidate resources in the available resources based on the non-monitored slots, if the total number of available resources belonging to the union of the available resources remaining based on the PPS and the available resources remaining based on the result of the CPS is less than the Ymin and/or less than a specific threshold value, the UE may randomly select an available resource or a transmission resource from a separately configured exceptional resource pool if random resource selection is not allowed in the resource pool.

For example, (embodiment 9) in the case of embodiment 3 above, for example, if the total number of available resources belonging to the union of the remaining available resources based on the PPS and the remaining available resources based on the CPS is less than the Ymin or less than a specific threshold, the UE may randomly select an available resource or a transmission resource from the resource pool if random resource selection is allowed in the resource pool.

For example, (embodiment 10) in the case of embodiment 3 above, for example, when the total number of available resources belonging to the union of the available resources remaining based on the PPS and the available resources remaining based on the CPS is less than the Ymin and/or less than a specific threshold, the UE may randomly select an available resource or a transmission resource from a separately configured exceptional resource pool if random resource selection is not allowed in the resource pool.

For example, (embodiment 11) in the case of embodiment 1 above, for example, when the number of remaining available resources after performing both PPS and CPS is less than the Ymin or less than a specific threshold, the UE may randomly select an available resource or a transmission resource from the resource pool if random resource selection is allowed in the resource pool.

For example, (embodiment 12) in the case of embodiment 1 above, for example, when the number of available resources remaining after performing both PPS and CPS is less than the Ymin or less than a specific threshold, the UE may randomly select an available resource or a transmission resource from a separately configured exceptional resource pool if random resource selection is not allowed in the resource pool.

When partial sensing is configured in the resource pool for which periodic transmission is allowed and a UE triggers a (re)transmission resource for periodic transmission, the UE may configure a resource selection window and configure Y candidate slots within the resource selection window that are greater than or equal to at least Ymin set as a specific threshold value, and then perform both PPS and CPS to detect whether there is a resource conflict for the candidate slots. In the above-described operation, the UE may select a (re)transmission resource for the periodic transmission by the following operation.

For example, (embodiment 13) for example, for an arbitrary one candidate slot among the Y candidate slots, for all or part of the resource transmission periods configured in the resource pool for performing the PPS, when all of the required sensing occasions, configured based on the time points of an integer multiple of the transmission periods for the PPS, have not been performed, the UE may determine that PPS results are not available for the candidate slot. For example, as described above, a candidate slot for which PPS results are not available may be excluded from candidate slots/resources.

For example, (embodiment 14) in the case of embodiment 12 described above, for example, if the number of available candidate slots remaining after excluding the candidate slots that are not available as a result of the PPS is not less than the Ymin or less than a specific threshold value, the UE may select the remaining candidate slots as the final candidate slots to be used for the resource selection procedure.

For example, (embodiment 15) in the case of embodiment 13 above, for example, if the number of available candidate slots after excluding candidate slots for which the PPS result is not available is less than the Ymin and/or less than a specific threshold, the UE may, within the resource selection window, among the slots from which the Y candidate slots are excluded, include slots including resources for which the CPS result is available as candidate slots/resources.

For example, (embodiment 16) in the case of embodiment 15 above, for example, if the total number of candidate slots belonging to the union of the candidate slots for which the PPS result is available and the candidate slots for which the CPS result is available is not less than Ymin or less than a specific threshold, the UE may select the candidate slots included in the union as the final candidate slots to be used for the resource selection procedure.

For example, (embodiment 17) in the case of embodiment 15 above, for example, if the total number of candidate slots belonging to the union of candidate slots where the PPS result is available and slots including resources where the CPS result is available is less than the Ymin and/or less than a specific threshold, the (candidate) slots that were excluded based on sensing occasions that were not monitored when performing the PPS or the CPS due to conflicts with the UE's transmission time point may be re-included in the final candidate slots to be used for the resource selection procedure.

For example, (embodiment 18) in the case of embodiment 17 above, for example, when the total number of candidate slots where the (candidate) slots that were excluded based on non-monitored sensing occasions when performing the PPS or the CPS are re-included in the final candidate slots to be used for the resource selection procedure is not less than the Ymin or less than a specific threshold, the UE may select the candidate slots as the final candidate slots to be used for the resource selection procedure.

For example, (embodiment 19) in the case of embodiment 17 above, for example, when the total number of candidate slots where the (candidate) slots that have been excluded based on non-monitored sensing occasions when performing the PPS and/or the CPS are re-included in the final candidate slots to be used for the resource selection procedure is less than the Ymin and/or less than a specific threshold value, if random resource selection is allowed in the resource pool, the UE may select a transmission resource randomly from the resource pool by selecting all the slots included in the resource selection window as final candidate slots.

For example, (embodiment 20) in the case of embodiment 17 above, for example, when the total number of candidate slots where the (candidate) slots excluded based on non-monitored sensing occasions when performing the PPS and/or the CPS are re-included in the final candidate slots to be used for the resource selection procedure is less than the Ymin and/or less than a specific threshold, the UE may randomly select a transmission resource from a separately configured exceptional resource pool, if random resource selection is not allowed in the resource pool.

For example, (embodiment 21) in the case of embodiment 15 above, for example, if the total number of candidate slots after including slots including resources for which the CPS result is available in the candidate slots is less than the Ymin or less than a specific threshold, and if random resource selection is allowed in the resource pool, the UE may randomly select a transmission resource from the resource pool by selecting all slots included in the resource selection window as final candidate slots.

For example, (embodiment 22) in the case of embodiment 15 above, for example, if the total number of candidate slots after including slots in candidate slots including resources for which the CPS result is available, is less than the Ymin or less than a specific threshold, and random resource selection is not allowed in the resource pool, the UE may randomly select an available resource or a transmission resource from a separately configured exceptional resource pool.

For example, (embodiment 23) in the case of embodiment 13 above, for example, when the number of candidate slots for which the PPS results are available is less than the Ymin or less than a specific threshold, and random resource selection is allowed in the resource pool, the UE may randomly select a transmission resource from the resource pool by selecting all the slots included in the resource selection window as final candidate slots.

For example, (embodiment 24) in the case of embodiment 13 above, for example, when the number of candidate slots for which the PPS result is available is less than the Ymin or less than a specific threshold, and when random resource selection is not allowed in the resource pool, the UE may randomly select a transmission resource from a separately configured exceptional resource pool.

For example, (embodiment 25) in the case of embodiment 13 described above, for example, when the number of candidate slots for which the PPS result is available is less than the Ymin or less than a specific threshold value, the UE may select the number, which is less than the Ymin, of candidate slots as the final candidate slots for resource selection and perform the resource selection procedure. For example, in the case described above, the UE may select the initially selected Y candidate slots as the final candidate slots for resource selection and perform the resource selection procedure. For example, the above operation may be limited to be performed when REV and/or PEC is configured for the resource pool.

For example (Example 26) In the case of Example 15 above, for example, if the total number of candidate slots after including slots that includes resources for which the CPS result is available in the candidate slots is less than the Ymin or less than a specific threshold value, the UE may select the number, which is less than the Ymin, of candidate slots as the final candidate slots for resource selection and perform the resource selection procedure. For example, in the case described above, the UE may select the initially selected Y candidate slots as the final candidate slots for resource selection and perform the resource selection process. For example, the above operation may be limited to be performed when REV and/or PEC is configured for the resource pool.

For example, (embodiment 27) in the case of embodiment 17 above, for example, if the total number of candidate slots where (candidate) slots that were excluded based on non-monitored sensing occasions when performing the PPS and/or the CPS are re-included in the final candidate slots to be used for the resource selection procedure is less than the Ymin and/or less than a specific threshold value, the UE may select the number, which is less than the Ymin, of candidate slots as the final candidate slots for resource selection and perform the resource selection procedure. For example, in the case described above, the UE may select the initially selected Y candidate slots as the final candidate slots for resource selection and perform the resource selection process. For example, the above operation may be limited to be performed when REV and/or PEC is configured for the resource pool.

According to various embodiments of the present disclosure, when selecting resources for periodic transmissions based on partial sensing, if the number of candidate resources for which partial sensing results are available is insufficient, by selecting resources based on other additional partial sensing, the resources are selected to minimize resource conflicts.

According to prior art, since resources are selected randomly from the entire set of available resources reported to the MAC layer, resources may be selected inefficiently when considering, for example, the RAT of the receiving UE. According to embodiments of the present disclosure, since resources are selected such that a threshold ratio is met in each of a plurality of intervals determined within the selection window, resources may be selected more efficiently considering the SL DRX operation of a receiving UE.

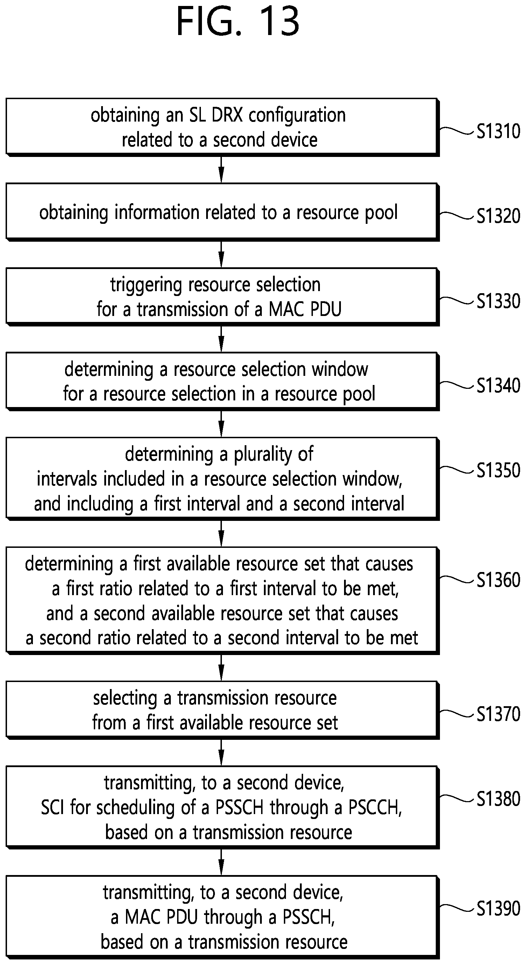

FIG. 13 shows a procedure for a first device to perform wireless communication, according to one embodiment of the present disclosure. The embodiment of FIG. 13 may be combined with various embodiments of the present disclosure.

Referring to FIG. 13, in step S1310, a first device may obtain a sidelink (SL) discontinuous reception (DRX) configuration related to a second device. In step S1320, the first device may obtain information related to a resource pool. In step S1330, the first device may trigger resource selection for a transmission of a medium access control (MAC) protocol data unit (PDU). In step S1340, the first device may determine a resource selection window for the resource selection in the resource pool. In step S1350, the first device may determine a plurality of intervals included in the resource selection window, and including a first interval and a second interval. In step S1360, the first device may determine a first available resource set that causes a first ratio related to the first interval to be met, and a second available resource set that causes a second ratio related to the second interval to be met. In step S1370, the first device may select a transmission resource from the first available resource set. In step S1380, the first device may transmit, to the second device, sidelink control information (SCI) for scheduling of a physical sidelink shared channel (PSSCH) through a physical sidelink control channel (PSCCH), based on the transmission resource. In step S1390, the first device may transmit, to the second device, the MAC PDU through the PSSCH, based on the transmission resource. For example, the first interval may include a first active time of the SL DRX configuration.

For example, the first ratio may be the same as the second ratio.

For example, the first ratio may be different from the second ratio.

For example, a first reference signal receiver power (RSRP) threshold value related to the first interval may be the same as a second RSRP threshold value related to the second interval.

For example, a first RSRP threshold value related to the first interval may be different from a second RSRP threshold value related to the second interval.

For example, the first interval may be a temporally earliest interval among the plurality of intervals.

For example, a sum of time lengths of the plurality of intervals may be smaller than or equal to packet delay budget (PDB) related to the MAC PDU.

For example, a sum of a plurality of ratios related to the plurality of intervals may be greater than or equal to an entire threshold ratio related to the selection window.

For example, the transmission resource may be selected from the first available resource set and the second available resource set.

For example, the transmission resource may be selected to preferentially include at least one resource in the first available resource set.

For example, additionally, the first device may determine a third available resource set that causes a third ratio related to a third interval to be met. For example, the transmission resource may be selected from the first available resource set, the second available resource set, and the third available resource set, and the transmission resource may be selected to preferentially include at least one resource in the first available resource set.

For example, the second interval may include a second active time extended based on a transmission performed within the first interval, and the third interval may include a third active time extended based on a transmission performed within the second interval.

For example, a first available resource set and a second available resource set may be transferred from a physical layer of the first device to a MAC layer of the first device.

The embodiments described above may be applied to various devices described below. First, a processor 102 of a first device 100 may obtain a sidelink (SL) discontinuous reception (DRX) configuration related to a second device 200. And, the processor 102 of the first device 100 may obtain information related to a resource pool. And, the processor 102 of the first device 100 may trigger resource selection for a transmission of a medium access control (MAC) protocol data unit (PDU). And, the processor 102 of the first device 100 may determine a resource selection window for the resource selection in the resource pool. And, the processor 102 of the first device 100 may determine a plurality of intervals included in the resource selection window, and including a first interval and a second interval. And, the processor 102 of the first device 100 may determine a first available resource set that causes a first ratio related to the first interval to be met, and a second available resource set that causes a second ratio related to the second interval to be met. And, the processor 102 of the first device 100 may select a transmission resource from the first available resource set. And, the processor 102 of the first device 100 may control a transceiver 106 to transmit, to the second device 200, sidelink control information (SCI) for scheduling of a physical sidelink shared channel (PSSCH) through a physical sidelink control channel (PSCCH), based on the transmission resource. And, the processor 102 of the first device 100 may control the transceiver 106 to transmit, to the second device 200, the MAC PDU through the PSSCH, based on the transmission resource. For example, the first interval may include a first active time of the SL DRX configuration.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain a sidelink (SL) discontinuous reception (DRX) configuration related to a second device; obtain information related to a resource pool; trigger resource selection for a transmission of a medium access control (MAC) protocol data unit (PDU); determine a resource selection window for the resource selection in the resource pool; determine a plurality of intervals included in the resource selection window, and including a first interval and a second interval; determine a first available resource set that causes a first ratio related to the first interval to be met, and a second available resource set that causes a second ratio related to the second interval to be met; select a transmission resource from the first available resource set; transmit, to the second device, sidelink control information (SCI) for scheduling of a physical sidelink shared channel (PSSCH) through a physical sidelink control channel (PSCCH), based on the transmission resource; and transmit, to the second device, the MAC PDU through the PSSCH, based on the transmission resource, wherein the first interval may include a first active time of the SL DRX configuration.

For example, the first ratio may be the same as the second ratio.

For example, the first ratio may be different from the second ratio.

For example, a first reference signal receiver power (RSRP) threshold value related to the first interval may be the same as a second RSRP threshold value related to the second interval.

For example, a first RSRP threshold value related to the first interval may be different from a second RSRP threshold value related to the second interval.

For example, the first interval may be a temporally earliest interval among the plurality of intervals.

For example, a sum of time lengths of the plurality of intervals may be smaller than or equal to packet delay budget (PDB) related to the MAC PDU.

For example, a sum of a plurality of ratios related to the plurality of intervals may be greater than or equal to an entire threshold ratio related to the selection window.

For example, the transmission resource may be selected from the first available resource set and the second available resource set.

For example, the transmission resource may be selected to preferentially include at least one resource in the first available resource set.

For example, additionally, the first device may determine a third available resource set that causes a third ratio related to a third interval to be met. For example, the transmission resource may be selected from the first available resource set, the second available resource set, and the third available resource set, and the transmission resource may be selected to preferentially include at least one resource in the first available resource set.

For example, the second interval may include a second active time extended based on a transmission performed within the first interval, and the third interval may include a third active time extended based on a transmission performed within the second interval.

For example, a first available resource set and a second available resource set may be transferred from a physical layer of the first device to a MAC layer of the first device.

According to an embodiment of the present disclosure, a device adapted to control a first user equipment (UE) may be proposed. For example, the device may comprise: one or more processors; and one or more memories operably connectable to the one or more processors and storing instructions. For example, the one or more processors may execute the instructions to: obtain a sidelink (SL) discontinuous reception (DRX) configuration related to a second UE; obtain information related to a resource pool; trigger resource selection for a transmission of a medium access control (MAC) protocol data unit (PDU); determine a resource selection window for the resource selection in the resource pool; determine a plurality of intervals included in the resource selection window, and including a first interval and a second interval; determine a first available resource set that causes a first ratio related to the first interval to be met, and a second available resource set that causes a second ratio related to the second interval to be met; select a transmission resource from the first available resource set; transmit, to the second UE, sidelink control information (SCI) for scheduling of a physical sidelink shared channel (PSSCH) through a physical sidelink control channel (PSCCH), based on the transmission resource; and transmit, to the second UE, the MAC PDU through the PSSCH, based on the transmission resource, wherein the first interval may include a first active time of the SL DRX configuration.

According to an embodiment of the present disclosure, a non-transitory computer-readable storage medium storing instructions may be proposed. For example, the instructions, when executed, may cause a first device to: obtain a sidelink (SL) discontinuous reception (DRX) configuration related to a second device; obtain information related to a resource pool; trigger resource selection for a transmission of a medium access control (MAC) protocol data unit (PDU); determine a resource selection window for the resource selection in the resource pool; determine a plurality of intervals included in the resource selection window, and including a first interval and a second interval; determine a first available resource set that causes a first ratio related to the first interval to be met, and a second available resource set that causes a second ratio related to the second interval to be met; select a transmission resource from the first available resource set; transmit, to the second device, sidelink control information (SCI) for scheduling of a physical sidelink shared channel (PSSCH) through a physical sidelink control channel (PSCCH), based on the transmission resource; and transmit, to the second device, the MAC PDU through the PSSCH, based on the transmission resource, wherein the first interval may include a first active time of the SL DRX configuration.

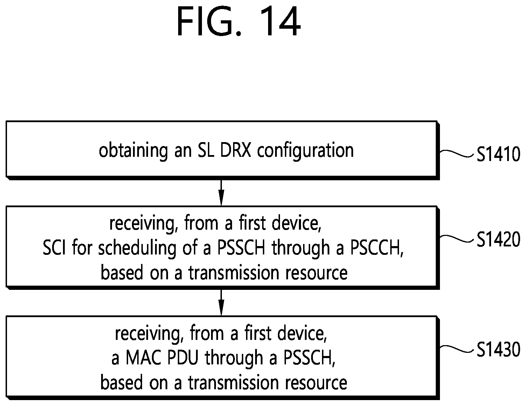

FIG. 14 shows a procedure for a second device to perform wireless communication, according to one embodiment of the present disclosure. The embodiment of FIG. 14 may be combined with various embodiments of the present disclosure.

Referring to FIG. 14, in step S1410, a second device may obtain a sidelink (SL) discontinuous reception (DRX) configuration. In step S1420, the second device may receive, from a first device, sidelink control information (SCI) for scheduling of a physical sidelink shared channel (PSSCH) through a physical sidelink control channel (PSCCH), based on a transmission resource. In step S1430, the second device may receive, from the first device, the MAC PDU through the PSSCH, based on the transmission resource. For example, the transmission resource may be selected from a first available resource set, the first available resource set may be determined such that a first ratio related to a first interval is met, a second interval that causes a first ratio related to a second interval to be met and the first interval may be included in a resource selection window in a resource pool, and the first interval may include a first active time of the SL DRX configuration.

For example, the transmission resource may be selected from the first available resource set and the second available resource set, and the transmission resource may be selected to preferentially include at least one resource in the first available resource set.

The embodiments described above may be applied to various devices described below. First, a processor 202 of a second device 200 may obtain a sidelink (SL) discontinuous reception (DRX) configuration. And, the processor 202 of the second device 200 may control a transceiver 206 to receive, from a first device 100, sidelink control information (SCI) for scheduling of a physical sidelink shared channel (PSSCH) through a physical sidelink control channel (PSCCH), based on a transmission resource. And, the processor 202 of the second device 200 may control the transceiver 206 to receive, from the first device 100, the MAC PDU through the PSSCH, based on the transmission resource. For example, the transmission resource may be selected from a first available resource set, the first available resource set may be determined such that a first ratio related to a first interval is met, a second interval that causes a first ratio related to a second interval to be met and the first interval may be included in a resource selection window in a resource pool, and the first interval may include a first active time of the SL DRX configuration.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: obtain a sidelink (SL) discontinuous reception (DRX) configuration; receive, from a first device, sidelink control information (SCI) for scheduling of a physical sidelink shared channel (PSSCH) through a physical sidelink control channel (PSCCH), based on a transmission resource; and receive, from the first device, the MAC PDU through the PSSCH, based on the transmission resource, wherein the transmission resource may be selected from a first available resource set, wherein the first available resource set may be determined such that a first ratio related to a first interval is met, wherein a second interval that causes a first ratio related to a second interval to be met and the first interval may be included in a resource selection window in a resource pool, and wherein the first interval may include a first active time of the SL DRX configuration.

For example, the transmission resource may be selected from the first available resource set and the second available resource set, and the transmission resource may be selected to preferentially include at least one resource in the first available resource set.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

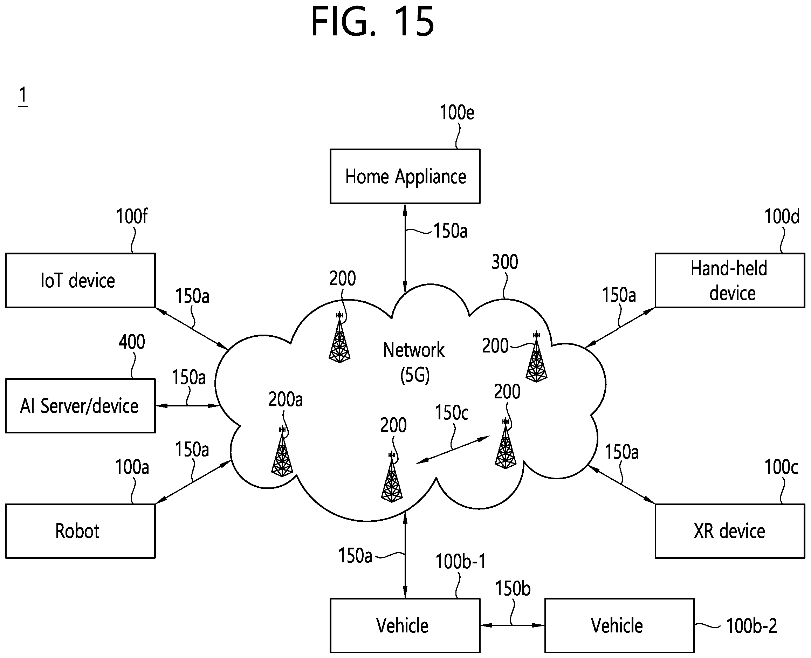

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

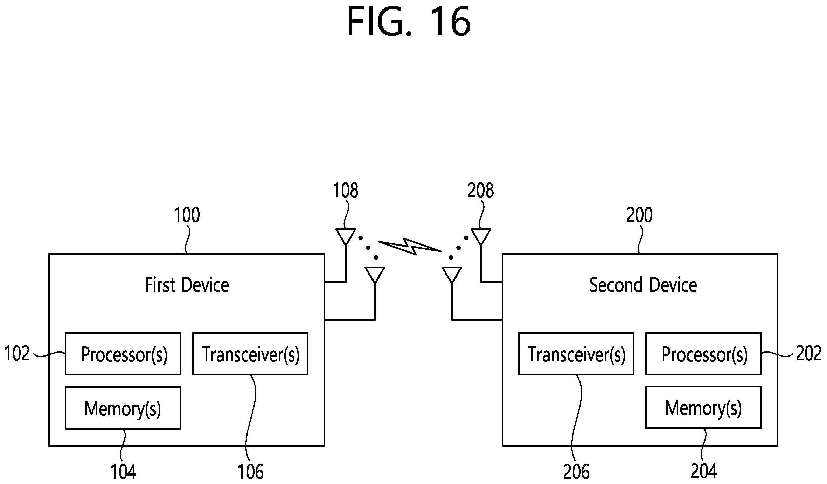

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

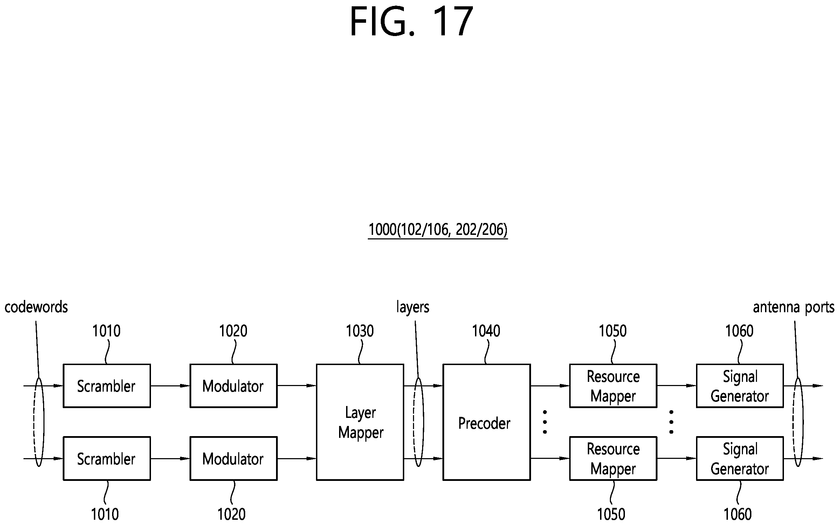

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

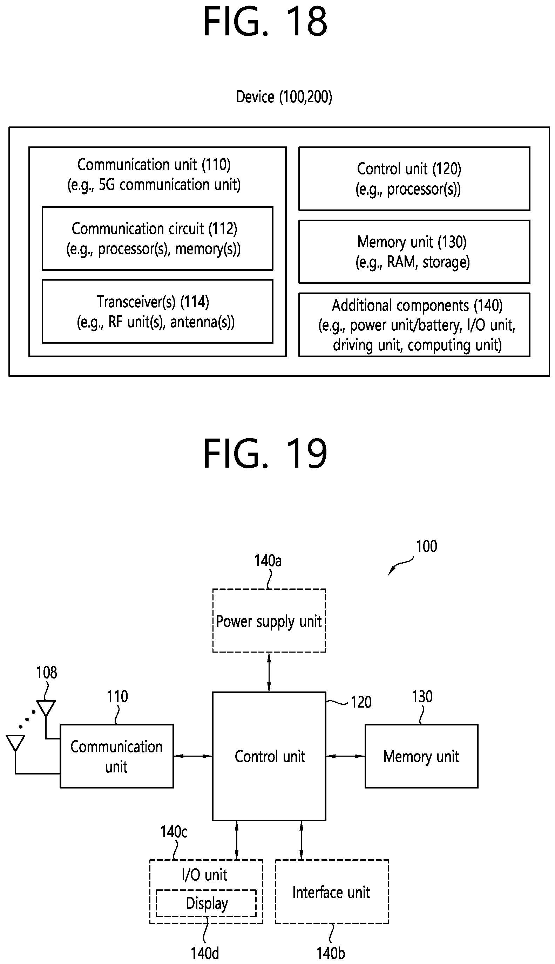

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

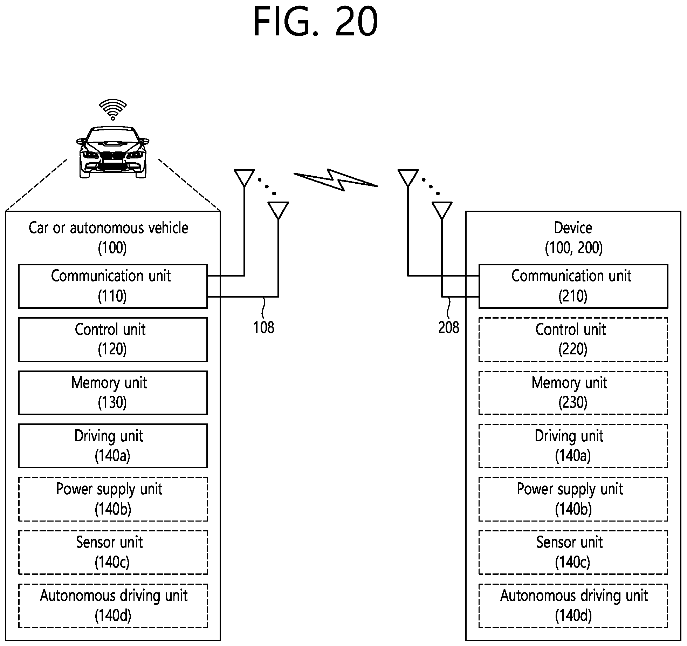

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:

   obtaining a sidelink (SL) discontinuous reception (DRX) configuration related to a second device;
   obtaining information related to a resource pool;
   triggering resource selection for a transmission of a medium access control (MAC) protocol data unit (PDU);
   determining a resource selection window for the resource selection in the resource pool;
   determining a plurality of intervals included in the resource selection window, and including a first interval and a second interval;
   determining a first available resource set that causes a first ratio related to the first interval to be met, and a second available resource set that causes a second ratio related to the second interval to be met;
   selecting a transmission resource from the first available resource set;
   transmitting, to the second device, sidelink control information (SCI) for scheduling of a physical sidelink shared channel (PSSCH) through a physical sidelink control channel (PSCCH), based on the transmission resource; and
   transmitting, to the second device, the MAC PDU through the PSSCH, based on the transmission resource, wherein the first interval includes a first active time of the SL DRX configuration.

2. The method of claim 1, wherein the first ratio is the same as the second ratio.

3. The method of claim 1, wherein the first ratio is different from the second ratio.

4. The method of claim 1, wherein a first reference signal receiver power (RSRP) threshold value related to the first interval is the same as a second RSRP threshold value related to the second interval.

5. The method of claim 1, wherein a first RSRP threshold value related to the first interval is different from a second RSRP threshold value related to the second interval.

6. The method of claim 1, wherein the first interval is a temporally earliest interval among the plurality of intervals.

7. The method of claim 1, wherein a sum of time lengths of the plurality of intervals is smaller than or equal to packet delay budget (PDB) related to the MAC PDU.

8. The method of claim 1, wherein a sum of a plurality of ratios related to the plurality of intervals is greater than or equal to an entire threshold ratio related to the selection window.

9. The method of claim 1, wherein the transmission resource is selected from the first available resource set and the second available resource set.

10. The method of claim 9, wherein the transmission resource is selected to preferentially include at least one resource in the first available resource set.

11. The method of claim 1, further comprising:

determining a third available resource set that causes a third ratio related to a third interval to be met, wherein the transmission resource is selected from the first available resource set, the second available resource set, and the third available resource set, and
wherein the transmission resource is selected to preferentially include at least one resource in the first available resource set.

12. The method of claim 11, wherein the second interval includes a second active time extended based on a transmission performed within the first interval, and
wherein the third interval includes a third active time extended based on a transmission performed within the second interval.

13. The method of claim 1, wherein a first available resource set and a second available resource set are transferred from a physical layer of the first device to a MAC layer of the first device.

14. A first device for performing wireless communication, the first device comprising:

one or more memories storing instructions;
one or more transceivers; and
one or more processors connected to the one or more memories and the one or more transceivers, wherein the one or more processors execute the instructions to:

obtain a sidelink (SL) discontinuous reception (DRX) configuration related to a second device;
obtain information related to a resource pool;
trigger resource selection for a transmission of a medium access control (MAC) protocol data unit (PDU);
determine a resource selection window for the resource selection in the resource pool;
determine a plurality of intervals included in the resource selection window, and including a first interval and a second interval;
determine a first available resource set that causes a first ratio related to the first interval to be met, and a second available resource set that causes a second ratio related to the second interval to be met;
select a transmission resource from the first available resource set;
transmit, to the second device, sidelink control information (SCI) for scheduling of a physical sidelink shared channel (PSSCH) through a physical sidelink control channel (PSCCH), based on the transmission resource; and
transmit, to the second device, the MAC PDU through the PSSCH, based on the transmission resource, wherein the first interval includes a first active time of the SL DRX configuration.

15. A device adapted to control a first user equipment (UE), the device comprising:

one or more processors; and
one or more memories operably connectable to the one or more processors and storing instructions, wherein the one or more processors execute the instructions to:

obtain a sidelink (SL) discontinuous reception (DRX) configuration related to a second LTE;
obtain information related to a resource pool;
trigger resource selection for a transmission of a medium access control (MAC) protocol data unit (PDU);
determine a resource selection window for the resource selection in the resource pool;
determine a plurality of intervals included in the resource selection window, and including a first interval and a second interval;
determine a first available resource set that causes a first ratio related to the first interval to be met, and a second available resource set that causes a second ratio related to the second interval to be met;
select a transmission resource from the first available resource set;
transmit, to the second UE, sidelink control information (SCI) for scheduling of a physical sidelink shared channel (PSSCH) through a physical sidelink control channel (PSCCH), based on the transmission resource;

and
transmit, to the second UE, the MAC PDU through the PSSCH, based on the transmission resource, wherein the first interval includes a first active time of the SL DRX configuration.

16. A non-transitory computer-readable storage medium storing instructions that, when executed, cause a first device to:

obtain a sidelink (SL) discontinuous reception (DRX) configuration related to a second device;
obtain information related to a resource pool;
trigger resource selection for a transmission of a medium access control (MAC) protocol data unit (PDU);
determine a resource selection window for the resource selection in the resource pool;
determine a plurality of intervals included in the resource selection window, and including a first interval and a second interval;
determine a first available resource set that causes a first ratio related to the first interval to be met, and a second available resource set that causes a second ratio related to the second interval to be met;
select a transmission resource from the first available resource set;
transmit, to the second device, sidelink control information (SCI) for scheduling of a physical sidelink shared channel (PSSCH) through a physical sidelink control channel (PSCCH), based on the transmission resource; and
transmit, to the second device, the MAC PDU through the PSSCH, based on the transmission resource, wherein the first interval includes a first active time of the SL DRX configuration.

17. A method for performing, by a second device, wireless communication, the method comprising:

obtaining a sidelink (SL) discontinuous reception (DRX) configuration;
receiving, from a first device, sidelink control information (SCI) for scheduling of a physical sidelink shared channel (PSSCH) through a physical sidelink control channel (PSCCH), based on a transmission resource; and
receiving, from the first device, the MAC PDU through the PSSCH, based on the transmission resource, wherein the transmission resource is selected from a first available resource set,
wherein the first available resource set is determined such that a first ratio related to a first interval is met,
wherein a second interval that causes a first ratio related to a second interval to be met and the first interval are included in a resource selection window in a resource pool, and
wherein the first interval includes a first active time of the SL DRX configuration.

18. The method of claim 17, wherein the transmission resource is selected from the first available resource set and the second available resource set, and
wherein the transmission resource is selected to preferentially include at least one resource in the first available resource set.

19. A second device for performing wireless communication, the second device comprising:

one or more memories storing instructions;
one or more transceivers; and
one or more processors connected to the one or more memories and the one or more transceivers, wherein the one or more processors execute the instructions to:

obtain a sidelink (SL) discontinuous reception (DRX) configuration;
receive, from a first device, sidelink control information (SCI) for scheduling of a physical sidelink shared channel (PSSCH) through a physical sidelink control channel (PSCCH), based on a transmission resource; and
receive, from the first device, the MAC PDU through the PSSCH, based on the transmission resource, wherein the transmission resource is selected from a first available resource set,
wherein the first available resource set is determined such that a first ratio related to a first interval is met,
wherein a second interval that causes a first ratio related to a second interval to be met and the first interval are included in a resource selection window in a resource pool, and
wherein the first interval includes a first active time of the SL DRX configuration.

20. The second device of claim 19, wherein the transmission resource is selected from the first available resource set and the second available resource set, and
wherein the transmission resource is selected to preferentially include at least one resource in the first available

resource set.

# FIG. 1

# FIG. 2

(a)

(b)

(c)

PC5-U

(d)

PC5-C

EP 4 387 352 A1

# FIG. 3

| | One Frame (10ms) | |
|---|---|---|
| ... | | ... |

| | Half-Frame (5ms) | Half-Frame (5ms) | |
|---|---|---|---|
| ... | | | ... |

| | Subframe 0 (1ms) | | Subframe 4 (1ms) | Subframe 5 (1ms) | | Subframe 9 (1ms) | |
|---|---|---|---|---|---|---|---|
| ... | | ... | | | ... | | ... |

Subframe (1ms)

**15KHz**

| Slot 0 (14symbols) |
|---|

1ms

**30KHz**

| Slot 0 (14symbols) | Slot 1 |
|---|---|

500us

**60KHz**

| Slot 0 (14symbols) | Slot 1 | Slot 2 | Slot 3 |
|---|---|---|---|

250us

**120KHz**

| Slot 0 (14symbols) | Slot 1 | Slot 2 | Slot 3 | Slot 4 | Slot 5 | Slot 6 | Slot 7 |
|---|---|---|---|---|---|---|---|

125us

# FIG. 4

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 387 352 A1

# FIG. 5

PRB N3

PRB 1
PRB 0

$N_{BWP, 2}^{size}$

PRB N2

PRB 1
PRB 0

$N_{BWP, 1}^{size}$

PRB N1

PRB 1
PRB 0

$N_{BWP, 0}^{size}$

CRB 0

$N_{BWP, 0}^{start}$

$N_{BWP, 1}^{start}$

$N_{BWP, 2}^{start}$

Carrier Bandwidth

Freq.

Time

PRB 0 (Point A) in reference resource block

# FIG. 6

(a)

(b)

# FIG. 7

(a)

(b)

(c)

● : TX UE

⊘ : RX UE

# FIG. 8

: specific slot among Y candidate slots

: slots that are targets of sensing

# FIG. 9

Freq.

P1     P1

P2    P2    P2

Time

slot #Y1

selection window

⬚ : specific slot among Y candidate slots

▨ : slots that are targets of sensing

FIG. 10

# FIG. 11

EP 4 387 352 A1

S1110

| First interval | Second interval | Third interval | · · · |

sensing window

First available resource set     Second available resource set     Third available resource set

S1120

Threshold ratio 1     Threshold ratio 2     Threshold ratio 3

# FIG. 12

EP 4 387 352 A1

# FIG. 13

obtaining an SL DRX configuration
related to a second device —— S1310

obtaining information related to a resource pool —— S1320

triggering resource selection
for a transmission of a MAC PDU —— S1330

determining a resource selection window
for a resource selection in a resource pool —— S1340

determining a plurality of
intervals included in a resource selection window,
and including a first interval and a second interval —— S1350

determining a first available resource set that causes
a first ratio related to a first interval to be met,
and a second available resource set that causes
a second ratio related to a second interval to be met —— S1360

selecting a transmission resource
from a first available resource set —— S1370

transmitting, to a second device,
SCI for scheduling of a PSSCH through a PSCCH,
based on a transmission resource —— S1380

transmitting, to a second device,
a MAC PDU through a PSSCH,
based on a transmission resource —— S1390

# FIG. 14

obtaining an SL DRX configuration — S1410

receiving, from a first device,
SCI for scheduling of a PSSCH through a PSCCH,
based on a transmission resource — S1420

receiving, from a first device,
a MAC PDU through a PSSCH,
based on a transmission resource — S1430

# FIG. 15

1

# FIG. 16

EP 4 387 352 A1

# FIG. 17

1000(102/106, 202/206)

codewords → Scrambler (1010) → Modulator (1020) → Layer Mapper (1030) → layers → Precoder (1040) → Resource Mapper (1050) → Signal Generator (1060) → antenna ports

Scrambler (1010) → Modulator (1020) → Resource Mapper (1050) → Signal Generator (1060)

# FIG. 18

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 19

140a

100

Power supply unit

108

110

120

130

Communication
unit

Control unit

Memory unit

140c

I/O unit

Display

Interface unit

140d

140b

FIG. 20

<table>
<tr><td colspan="2">**INTERNATIONAL SEARCH REPORT**</td><td colspan="2">International application No.<br>**PCT/KR2022/011535**</td></tr>
</table>

**A. CLASSIFICATION OF SUBJECT MATTER**

**H04W 72/02**(2009.01)i; **H04W 72/04**(2009.01)i; **H04W 76/28**(2018.01)i; **H04W 4/40**(2018.01)i; **H04W 92/18**(2009.01)i

According to International Patent Classification (IPC) or to both national classification and IPC

**B. FIELDS SEARCHED**

Minimum documentation searched (classification system followed by classification symbols)

H04W 72/02(2009.01); H04W 28/08(2009.01); H04W 72/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SL(sidelink), DRX(discontinuous reception), 자원 풀(resource pool), MAC(medium access control) PDU(protocol data unit), 자원 선택(resource selection), 트리거링(triggering), 선택 윈도우(selection window), 유효 자원 집합(available resource set), 비율(ratio), PSCCH(physical sidelink control channel), PSSCH(physical sidelink shared channel), SCI(sidelink control information), 구간(interval)

**C. DOCUMENTS CONSIDERED TO BE RELEVANT**

| Category* | Citation of document, with indication, where appropriate, of the relevant passages | Relevant to claim No. |
|---|---|---|
| A | FUTUREWEI. Power consumption reduction for sidelink resource allocation. R1-2107091, 3GPP TSG RAN WG1 Meeting #106-e. 06 August 2021.<br>See sections 2.2.1 and 2.4. | 1-20 |
| A | LG ELECTRONICS. Discussion on resource allocation for power saving. R1-2107528, 3GPP TSG RAN WG1 Meeting #106-e. 07 August 2021.<br>See section 2.3. | 1-20 |
| A | LG ELECTRONICS. Discussion on resource allocation for power saving. R1-2105204, 3GPP TSG RAN WG1 #105-e. 12 May 2021.<br>See sections 1-2.5. | 1-20 |
| A | HUAWEI et al. Sidelink resource allocation to reduce power consumption. R1-2104236, 3GPP TSG RAN WG1 #105-e. 26 May 2021.<br>See sections 1-2.6. | 1-20 |

☑ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 November 2022** | **03 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/011535** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2020-0029245 A1 (INTEL CORPORATION) 23 January 2020 (2020-01-23)<br>See paragraphs [0034]-[0191]; and figures 1-14. | 1-20 |

Form PCT/ISA/210 (second sheet) (July 2022)

International application No.

**PCT/KR2022/011535**

| Patent document cited in search report | | | Publication date (day/month/year) | Patent family member(s) | | | Publication date (day/month/year) |
|---|---|---|---|---|---|---|---|
| US | 2020-0029245 | A1 | 23 January 2020 | EP | 3577967 | A1 | 11 December 2019 |
| | | | | EP | 3577967 | B1 | 30 March 2022 |
| | | | | EP | 3962229 | A1 | 02 March 2022 |
| | | | | US | 11026120 | B2 | 01 June 2021 |
| | | | | WO | 2018-145067 | A1 | 09 August 2018 |

Form PCT/ISA/210 (patent family annex) (July 2022)